Europäisches Patentamt

European Patent Office

Office européen des brevets

(19)

(11) **EP 1 288 845 A2**

(12) **EUROPEAN PATENT APPLICATION**

(43) Date of publication:
**05.03.2003 Bulletin 2003/10**

(51) Int Cl.⁷: $G06K\ 9/00$

(21) Application number: **02017384.5**

(22) Date of filing: **02.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **03.08.2001 JP 2001236985**

(71) Applicant: **NEC CORPORATION**
**Tokyo (JP)**

(72) Inventor: **Uchida, Kaoru, c/oNEC Corporation**
**Tokyo (JP)**

(74) Representative: **Glawe, Delfs, Moll & Partner**
**Patentanwälte**
**Postfach 26 01 62**
**80058 München (DE)**

(54) **User authentication method and user authentication device**

(57)    A user authentication method of making determination of identity of a user based on an image of a part of a body of a user as biometrics captured by a sensor, including searching, with respect to feature information extracted from a single image of a part of a body captured by the sensor and a frame as a series of images of the part of the body captured by the sensor, a corresponding point between a preceding frame and a current frame to conduct user authentication based on a sweep pattern as a series of moving vectors obtained by calculating a moving vector of relative movement of a finger.

# FIG. 1

```
TO INPUT REGISTERED          101
FINGERPRINT IMAGE

TO EXTRACT COLLATION         102
FEATURES

TO STORE COLLATION           103
FEATURES

TO INPUT m-TH FRAME f(m)      104

TO CALCULATE MOVING VECTOR    105

TO STORE GROUP OF             106
MOVING VECTORS
```

## Description

BACKGROUND OF THE INVENTION

### 1. Field of the Invention

The present invention relates to a user authentication method of determining identity of a user at a personal information apparatus with a series of fingerprint images captured by a fingerprint sensor as input for the purpose of personal identification using fingerprints and a device therefor.

### 2. Description of the Related Art

Effective in user authentication for use in information apparatuses and information services is fingerprint matching making the most of identity of a fingerprint that is unique in every person and invariant over time. Conventional procedure taken in user authentication using fingerprint matching is in advance registering and preserving fingerprint data applied by an authorized user who has a right to use the apparatus or the service and collating fingerprint data obtained from a fingerprint input through a fingerprint input unit when a certain user uses the apparatus or the service with the fingerprint data (which will be referred to as template) of the authorized user and when they coincide with each other, allowing the user in question to use the apparatus and the service as an authorized user.

For conventional fingerprint input, often adopted is an input device using a so-called two-dimensional sensor which has an imprinting surface approximate to a square covering a sufficiently wide area of a finger tip.

The above-described conventional user authentication method has the following problems.

First, simple use of static fingerprint images applied through a sensor might fail to enable satisfactory user authentication in some cases. As recited, for example, in Yamada et at. "Can we make artificial fingers that fool fingerprint systems? (Part III)" (2001, Cryptography and Information Security Symposium (SCIS2001), pp. 719 ~ 724), there is a possibility of unlawful use by inputting false biometrics such as a false finger molded from a regular registered user by other person to pretend to be the regular registered user. This is a serious problem, in particular, when a high degree of secrecy is required as in information apparatuses for use in electronic commerce and the like.

Second problem is that while expansion of a range of information apparatus on which a user authentication device is mounted requires an input device for inputting a fingerprint to be reduced in cost and scale, the reduction in scale will be accompanied with deterioration of fingerprint matching precision. More specifically, although for the expansion of a range of the apparatus on which the device is mounted, it is desirable to use an input device having only a smaller region for use as a sensor surface than a fingerprint region, the sensor surface whose area is small will accommodate less features to result in degrading precision of fingerprint matching.

SUMMARY OF THE INVENTION

An object of the present invention is to provide a user authentication method and a user authentication device which eliminate such unlawfulness using such false biometrics including false finger as described above to realize more reliable user authentication.

Another object of the present invention is to provide a user authentication method and a user authentication device which allow even a sensor of a small area to realize highly precise user authentication at low costs.

According to the first aspect of the invention, a user authentication method of making determination of identity of a user based on an image of a part of a body of the user as biometrics captured by a sensor, comprising the step of

using information about a pattern of movement of the part of the body relative to the sensor as secret information for specifying a user to conduct user authentication.

In the preferred construction, determination of identity of a registered user is made based on both a degree of similarity of feature information extracted from a single image of the part of the body captured by the sensor and a degree of similarity of the relative movement pattern.

In another preferred construction, with respect to a frame as a series of images of the part of the body captured by the sensor, a corresponding point between a preceding frame and a current frame is searched to obtain a sweep pattern which is a series of moving vectors obtained by calculating a moving vector of the relative movement of the part of the body as the relative movement pattern, thereby conducting user authentication based on the sweep pattern in question.

In another preferred construction, with respect to feature information extracted from a single image of the part of the body captured by the sensor and a frame as a series of images of the part of the body captured by the sensor, a corresponding point between a preceding frame and a current frame is searched to conduct user authentication based on a sweep pattern as a series of moving vectors obtained by calculating a moving vector of relative movement of a finger.

In another preferred construction, a degree of similarity of the relative movement pattern and a frame as a series of images of the part of the body captured by the sensor are sequentially registered so as to have overlaps correlated best to extract feature information for collation from a composite image obtained by composition, thereby conducting user authentication based on a degree of similarity of the feature information in question.

In another preferred construction, with respect to a frame as a series of images of the part of the body captured by the sensor, a corresponding point between a preceding frame and a current frame is searched to obtain a sweep pattern which is a series of moving vectors obtained by calculating a moving vector of the relative movement of the part of the body as the relative movement pattern, and with respect to a frame as a series of images of the part of the body captured by the sensor, the frames are sequentially registered so as to have overlaps correlated best to extract feature information for collation from a composite image obtained by composition, thereby conducting user authentication based on the sweep pattern and the feature information.

In another preferred construction, a pressure value pattern as a series of pressure value difference vectors is obtained from a time series change of a pressure value in the relative movement of the part of the body to conduct user authentication based on the relative movement pattern and the pressure value pattern.

In another preferred construction, user authentication is conducted based on feature information extracted from a single image of the part of the body captured by the sensor, a sweep pattern which is a series of moving vectors obtained by searching, with respect to a frame as a series of images of the part of the body captured by the sensor, a corresponding point between a preceding frame and a current frame and calculating a moving vector of relative movement of a finger, and a pressure value pattern as a series of pressure value difference vectors obtained from a time series change of a pressure value in the relative movement of the part of the body.

In another preferred construction, with respect to a frame as a series of images of the part of the body captured by the sensor, a corresponding point between a preceding frame and a current frame is searched to obtain a sweep pattern which is a series of moving vectors obtained by calculating a moving vector of the relative movement of the part of the body as the relative movement pattern, with respect to a frame as a series of images of the part of the body captured by the sensor, the frames are sequentially registered so as to have overlaps correlated best to extract feature information for collation from a composite image obtained by composition, and a pressure value pattern as a series of pressure value difference vectors is obtained from a time series change of a pressure value in the relative movement of the part of the body, thereby conducting user authentication based on the sweep pattern, the feature information and the pressure value pattern.

In another preferred construction, the part of the body is a finger and relative movement pattern information of the finger in question is used as secret information for specifying a user. Also, the relative movement pattern information of a plurality of users are registered corresponding to the respective users to conduct user authentication for each selected user. Also, the relative movement pattern information of a plurality of users are registered corresponding to the respective users to conduct user authentication by specifying a user based on the relative movement pattern information of the user input through the sensor.

According to the second aspect of the invention, a user authentication device for making determination of identity of a user with an image of a part of a body of the user as biometrics captured by a sensor as input, wherein

information about a pattern of movement of the part of the body relative to the sensor is input to conduct user authentication based on the relative movement pattern.

In the preferred construction, determination of identity of a registered user is made based on both a degree of similarity of feature information extracted from a single image of the part of the body captured by the sensor and a degree of similarity of the relative movement pattern.

In another preferred construction, the user authentication device comprises means for searching, with respect to a frame as a series of images of the part of the body captured by the sensor, a corresponding point between a preceding frame and a current frame and calculating a moving vector of the relative movement of the part of the body to obtain a sweep pattern which is a series of moving vectors as the relative movement pattern.

In another preferred construction, the user authentication device comprises means for searching, with respect to a frame as a series of images of the part of the body captured by the sensor, a corresponding point between a preceding frame and a current frame and calculating a moving vector of the relative movement of the part of the body to obtain a sweep pattern which is a series of moving vectors as the relative movement pattern, means for storing a relative movement pattern of an authorized user in advance, and determination means for comparing a relative movement pattern obtained at the time of authentication with a relative movement pattern in the storage means to determine a degree of similarity between the patterns.

In another preferred construction, the user authentication device comprises means for extracting feature information from a single image of the part of the body captured by the sensor, first storage means for storing the feature information of an authorized user in advance, means for searching, with respect to a frame as a series of images of the part of the body captured by the sensor, a corresponding point between a preceding frame and a current frame and calculating a moving vector of the relative movement of the part of the body to obtain a sweep pattern which is a series of moving vectors as the relative movement pattern, second storage means for storing the relative movement pattern of an authorized user in advance, and determination means for comparing the feature information and the relative movement pattern obtained at the time of authentication with the feature information and the relative movement pattern in the first and second storage means to determine a degree of similarity between the information and patterns.

In another preferred construction, a degree of similarity of the relative movement pattern and a frame as a series of images of the part of the body captured by the sensor are sequentially registered so as to have overlaps correlated best to extract feature information for collation from a composite image obtained by composition, thereby conducting user authentication based on a degree of similarity of the feature information in question.

In another preferred construction, 19. The user authentication device comprises means for searching, with respect to a frame as a series of images of the part of the body captured by the sensor, a corresponding point between a preceding frame and a current frame and calculating a moving vector of the relative movement of the part of the body to obtain a sweep pattern which is a series of moving vectors as the relative movement pattern, means for sequentially registering, with respect to a frame as a series of images of the part of the body captured by the sensor, the frames so as to have overlaps correlated best to extract feature information for collation from a composite image obtained by composition, and determination means for comparing the feature information and the relative movement pattern obtained at the time of authentication with the feature information and the relative movement pattern of an authorized user to determine a degree of similarity between the information and patterns.

In another preferred construction, a pressure value pattern as a series of pressure value difference vectors is obtained from a time series change of a pressure value in the relative movement of the part of the body to conduct user authentication based on the relative movement pattern and the pressure value pattern.

In another preferred construction, the user authentication device comprises means for extracting feature information from a single image of the part of the body captured by the sensor, means for searching, with respect to a frame as a series of images of the part of the body captured by the sensor, a corresponding point between a preceding frame and a current frame and calculating a moving vector of the relative movement of the part of body to obtain a sweep pattern which is a series of moving vectors as the relative movement pattern, means for obtaining a pressure value pattern as a series of pressure value difference vectors from a time series change of a pressure value in the relative movement of the part of the body, and determination means for comparing the feature information, the relative movement pattern and the pressure value pattern obtained at the time of authentication with the feature information, the relative movement pattern and the pressure value pattern of an authorized user to determine a degree of similarity among the information and patterns.

In another preferred construction, the user authentication device comprises means for searching, with respect to a frame as a series of images of the part of the body captured by the sensor, a corresponding point between a preceding frame and a current frame and calculating a moving vector of the relative movement of the part of the body to obtain a sweep pattern which is a series of moving vectors as the relative movement pattern, means for sequentially registering, with respect to a frame as a series of images of the part of the body captured by the sensor, the frames so as to have overlaps correlated best to extract feature information for collation from a composite image obtained by composition, means for obtaining a pressure value pattern as a series of pressure value difference vectors from a time series change of a pressure value in the relative movement of the part of the body, and determination means for comparing the sweep pattern, the feature information and the pressure value pattern obtained at the time of authentication with the relative movement pattern, the feature information and the pressure value pattern of an authorized user to determine a degree of similarity between the information and patterns.

In another preferred construction, the part of the body is a finger and relative movement pattern information of the finger in question is used as secret information for specifying a user. Also, provided around the sensor is a cover for covering relative movement of the part of the body from the outside. Also, the relative movement pattern information of a plurality of users are registered corresponding to the respective users to conduct user authentication for each selected user. In this case, the user authentication device comprises selection means for selecting a user to be authenticated from among a plurality of users.

Preferably, the relative movement pattern information of a plurality of users are registered corresponding to the respective users to conduct user authentication by specifying a user based on the relative movement pattern information of the user input through the sensor.

According to the third aspect of the invention, a user authentication program for making determination of identity of a user based on an image of a part of a body of the user as biometrics captured by a sensor, comprising the function of

conducting user authentication by using information about a pattern of movement of the part of the body relative to the sensor as secret information for specifying a user.

According to another aspect of the invention, an information processing method using user authentication of making determination of identity of a user with an image of a part of a body of the user as biometrics captured by a sensor as input, comprising the steps of:

receiving input of information about a pattern of movement of the part of the body relative to the sensor to conduct user authentication based on the relative movement pattern in question,

having user inherent information related to interruption and resumption of operation of an apparatus which is correlated with the relative movement pattern information registered for each of a plurality of users, and

executing interruption and resumption of operation of the apparatus based on the user inherent information corresponding to a user whose user authentication has been conducted.

According to another aspect of the invention, an information apparatus having a user authentication device for making determination of identity of a user with an image of a part of a body of the user as biometrics captured by a sensor as input, which apparatus

inputs information about a pattern of movement of the part of the body relative to the sensor to conduct user authentication based on the relative movement pattern in question,

has user inherent information related to interruption and resumption of operation of the apparatus which is correlated with the relative movement pattern information registered for each of a plurality of users, and

executes interruption and resumption of operation of the apparatus based on the user inherent information corresponding to a user whose user authentication has been conducted.

According to a further aspect of the invention, an information processing method using user authentication of making determination of identity of a user with an image of a part of a body of the user as biometrics captured by a sensor as input, comprising the steps of:

inputting information about a pattern of movement of the part of the body relative to the sensor to conduct user authentication based on the relative movement pattern in question,

registering a command giving an instruction on operation of the apparatus so as to be correlated with the relative movement pattern information registered for each of a plurality of parts of the body or each of a plurality of users, and

executing operation of the apparatus based on the command corresponding to the part of the body or the user whose user authentication has been conducted.

According to a still further aspect of the invention, an information apparatus having a user authentication device for making determination of identity of a user with an image of a part of a body of the user as biometrics captured by a sensor as input, which apparatus

inputs information about a pattern of movement of the part of the body relative to the sensor to conduct user authentication based on the relative movement pattern in question,

registers a command giving an instruction on operation of the apparatus so as to be correlated with the relative movement pattern information registered for each of a plurality of parts of the body or each of a plurality of users, and

executes operation of the apparatus based on the command corresponding to the part of the body or the user whose user authentication has been conducted.

The present invention is intended to conduct user authentication using a plurality of image groups obtained by moving a finger on a sensor relatively to the sensor (sweeping), in which "sweep patterns" such as a start point, a path, speed and an end point of a finger sweep are also employed as secret information known only to a person in question for use as information for authentication. When input of both a sweep pattern and a series of fingerprint partial images obtained from a sweep made at the registration and the authentication satisfactorily coincide with other, the person in question is authenticated as the relevant person.

Other objects, features and advantages of the present invention will become clear from the detailed description given herebelow.

BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:

Fig. 1 is a flow chart for use in explaining the contents of processing of inputting and registering secret information which specifies an authorized user in a user authentication method according to a first embodiment of the present invention;

Fig. 2 is a flow chart for use in explaining the contents of processing of user authentication in the user authentication method according to the first embodiment of the present invention;

Fig. 3 is a view for use in explaining sweeping movement of a finger on a frame input unit;

Fig. 4 is a view showing a state of the sweeping movement of the finger illustrated in Fig. 3 as seen from the back side;

Fig. 5 is a block diagram showing a structure of a user authentication device according to the first embodiment of the present invention;

Fig. 6 is a block diagram showing an entire structure of the user authentication device according to the first embodiment of the present invention;

Fig. 7 is a plan view of a cover covering the frame input unit provided in the user authentication device according to the first embodiment of the present invention;

Fig. 8 is a sectional view of the cover covering the frame input unit provided in the user authentication device according to the first embodiment of the present invention;

Fig. 9 is a perspective view of the cover covering the frame input unit provided in the user authentication device according to the first embodiment of the present invention;

Fig. 10 is a flow chart for use in explaining the contents of processing of inputting and registering secret information which specifies an authorized user in a user authentication method according to a second embodiment of the present invention;

Fig. 11 is a flow chart for use in explaining the contents of processing of user authentication in the user authentication method according to the second embodiment of the present invention;

Fig. 12 is a diagram for use in explaining sweeping movement of a finger on a frame input unit;

Fig. 13 is a diagram for use in explaining midway progress of the sweeping movement of the finger on the frame input unit;

Fig. 14 is a block diagram showing a structure of a user authentication device according to the second embodiment of the present invention;

Fig. 15 is a block diagram showing an entire structure of the user authentication device according to the second embodiment of the present invention;

Fig. 16 is a block diagram showing a structure of a user authentication device according to a third embodiment of the present invention;

Fig. 17 is a block diagram showing an entire structure of the user authentication device according to the third embodiment of the present invention;

Fig. 18 is a flow chart for use in explaining the contents of processing of inputting and registering secret information which specifies an authorized user in a user authentication method according to the third embodiment of the present invention;

Fig. 19 is a flow chart for use in explaining the contents of processing of user authentication in the user authentication method according to the third embodiment of the present invention;

Fig. 20 is a block diagram showing an entire structure of a user authentication device according to a fourth embodiment of the present invention;

Fig. 21 is a block diagram showing an entire structure of a user authentication device according to a fifth embodiment of the present invention;

Fig. 22 is a block diagram showing a structure of an information apparatus to which a user authentication device according to a sixth embodiment of the present invention is applied;

Fig. 23 is a block diagram showing a structure of an information apparatus to which a user authentication device according to a seventh embodiment of the present invention is applied; and

Fig. 24 is a diagram showing an example of arrangement of a correspondence table stored in a storage unit according to the seventh embodiment of the present invention.

## DESCRIPTION OF THE PREFERRED EMBODIMENTS

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

(First Embodiment)

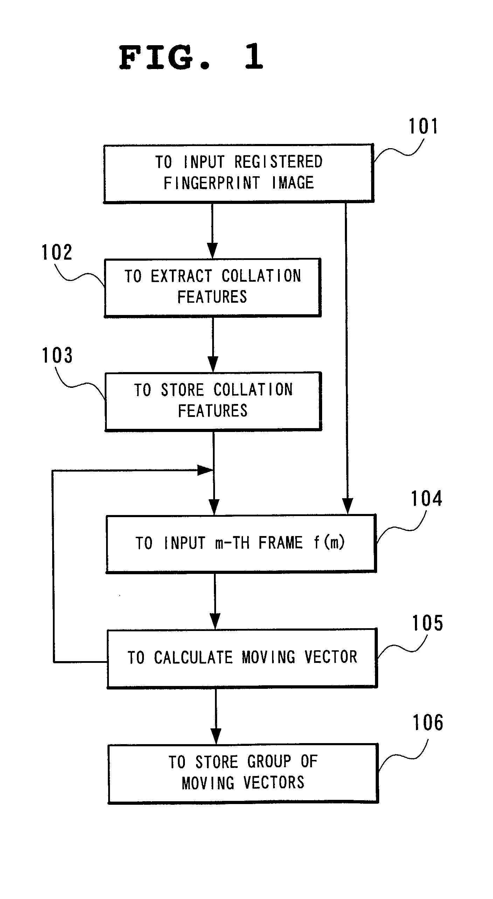

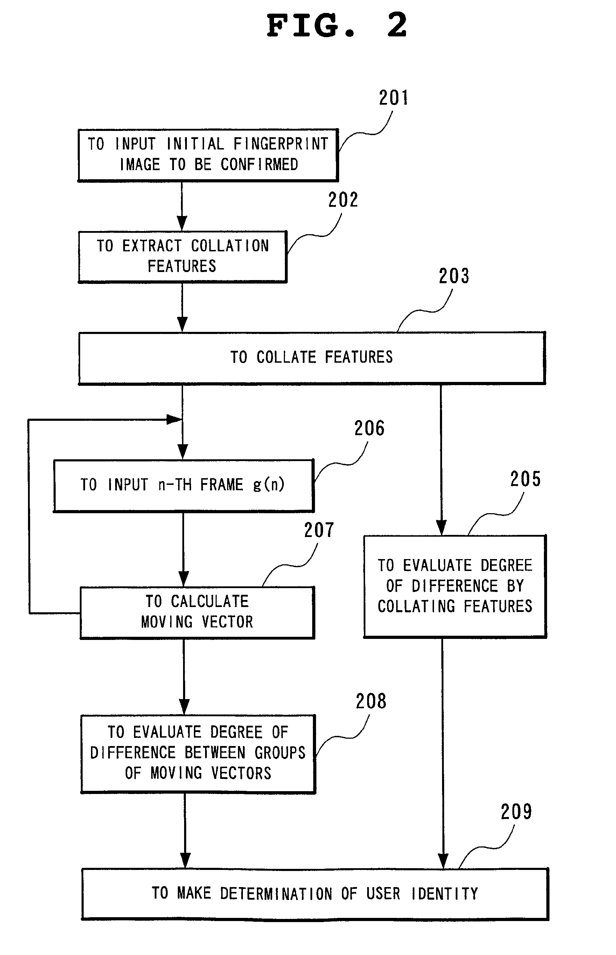

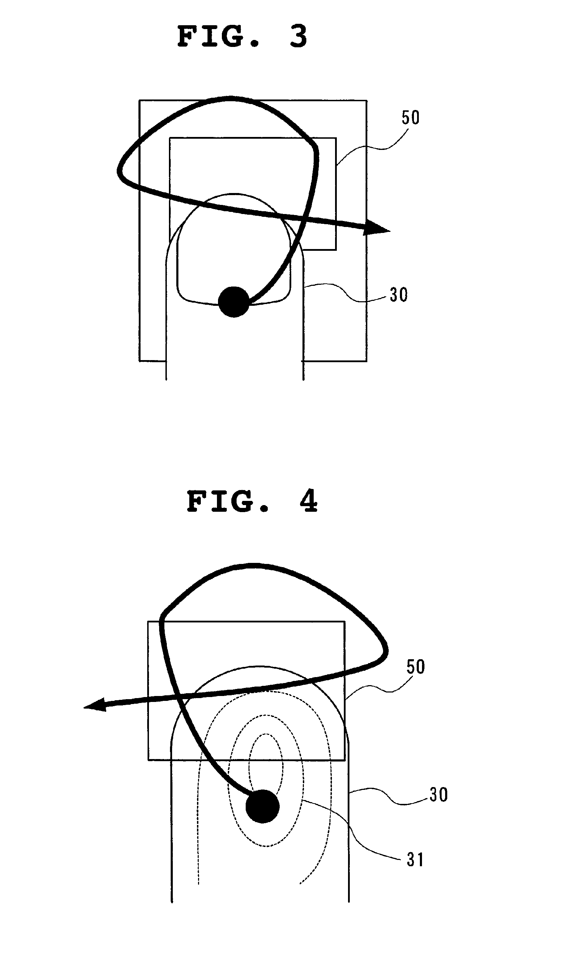

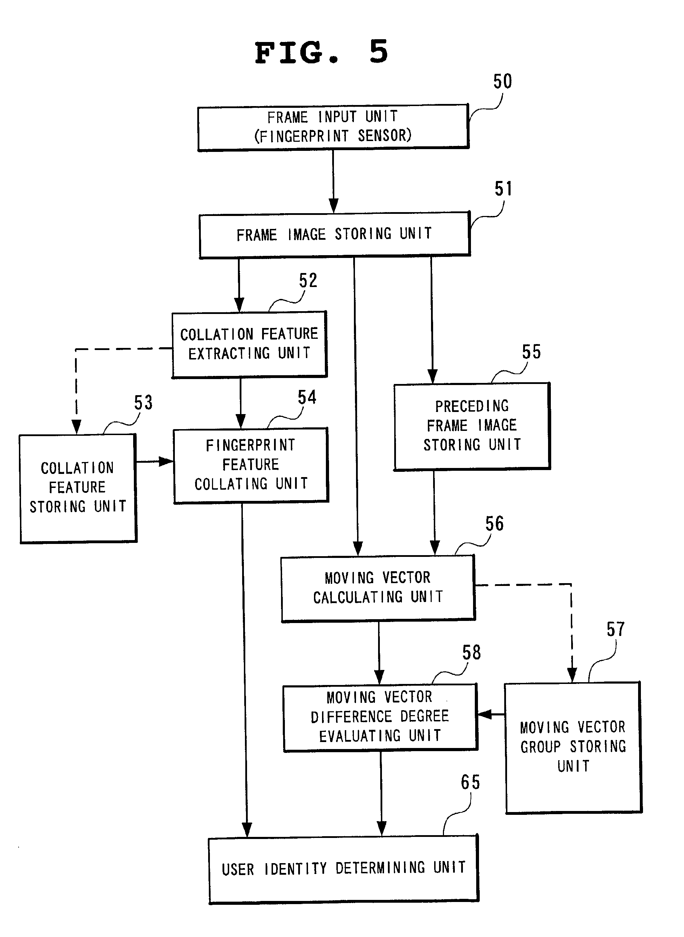

Figs. 1 and 2 are flow charts showing a flow of processing in the first embodiment, Figs. 3 and 4 are views showing an example of movement of a finger on a fingerprint sensor and Fig. 5 is a block diagram showing a structure of a user authentication device according to the present embodiment. The user authentication device is intended to confirm a user by using fingerprints in order not to allow a person other than a relevant person to use a personal information apparatus such as an information terminal, a videogame player and a portable telephone. The device is also intended to allow, when the above-described information apparatus is commonly used by a plurality of persons, only an authorized user to use it by the user-basis setting according to a fingerprint of each individual.

First, description will be made of the contents of a user authentication method according to the present embodiment with reference to Figs. 1 and 2. Assume that an information apparatus which employs the user authentication method is, for example, a portable terminal and its authorized user is the owner only.

At the start of use of the information apparatus or on other occasion, the owner registers his fingerprint data and sweep pattern at the device in advance in a manner as described in the following.

Here, description will be made of a procedure of registering the fingerprint data and the sweep pattern with reference to Fig. 1.

When the user as the owner of the information apparatus puts a part of a surface of his finger on a frame input unit (fingerprint sensor) provided for receiving input of a fingerprint image frame to bring the same into contact with the sensor, its captured image is input through the frame input unit (Step 101). Here, the first applied image data is assumed to be an image f(0) for the sake of convenience.

Then, extract features for fingerprint matching from the image data (Step 102) and store the extracted features as collation features (Step 103).

Subsequently the user two-dimensionally moves his finger put on the frame input unit relatively to the frame input unit with the finger being in contact with the frame input unit. Here, this movement is referred to as sweeping movement.

One example of the sweeping movement is shown in Fig. 3. The example shown in Fig. 3 illustrates how the finger put on a frame input unit (fingerprint sensor) 50 is swept as seen from above, with a curved arrow indicating movement of the finger on the frame input unit 50. Fig. 4 also shows the movement illustrated in Fig. 3 as seen from below, that is, the bulb of the finger seen from the side of the frame input unit 50.

When the finger is swept on the frame input unit 50, a frame as a partial image of the fingerprint captured by the frame input unit 50 is successively input as time passes (Step 101). A series of these frames successively input is denoted as $f(1) \sim f(m) \sim f(M)$. Assume in general that the finger is swept at a speed not too fast such that a time interval between frames is short enough and that adjacent frames have considerable captured areas overlapping with each other (i.e. such that an overlap of captured areas can be obtained that can be precisely calculated by a moving vector which will be described later).

When a certain frame f(m) is input (Step 104), a corresponding point between f(m-1), i.e. the preceding frame, and the current frame is searched to calculate a moving vector of relative motion of the finger (Step 105). In the calculation of a moving vector, when the number of corresponding points between the preceding frame and the current frame is smaller than a predetermined value necessary at least for calculating the moving vector, the user is asked to again input the image.

Using a series of these moving vectors (a group of moving vectors), movement of the finger in the sweeping movement can be represented. Here, the group of moving vectors will be referred to a sweep pattern. Then, store the series of the moving vectors with respect to each frame (Step 106). The foregoing is the fingerprint registration procedure for user authentication.

On the other hand, at the time when a certain user uses a function of the information apparatus which requires user authentication, the following user authentication processing is executed for the user as shown in Fig. 2.

When the user puts the same part of the surface of the finger on the frame input unit 50 for a fingerprint as that in the registration operation, the captured image of the fingerprint is input (Step 201). Here, the image is assumed to be an image g(0) for the sake of convenience. From the image data, features for fingerprint matching are extracted (Step 202) and collated with the previously stored collation features (Step 203) to evaluate the degree of difference (Step 205).

Subsequently, when the user sweeps his finger put on the frame input unit 50 in the same manner as in the registration operation, a frame as a partial image of the fingerprint captured by the frame input unit 50 is successively input as time passes (Step 206). Here, a series of these frames is represented as $g(1) \sim g(n) \sim g(N)$.

With respect to each frame g(n) applied, its corresponding point to its preceding frame g(n-1) is searched to calculate a moving vector of relative motion of the finger (Step 207).

By comparing the series of these moving vectors with the stored series of the moving vectors as of the registration, evaluate the degree of difference between sweep patterns as of the registration and as of user authentication (Step 208).

Then, at user authentication, make determination of user's identity based on the result of the above-described evaluation of the degree of difference in feature collation and the result of the evaluation of the degree of difference in sweep patterns (Step 209). In the determination of user's identity, when the result of each evaluation of the degree of difference is lower than a predetermined threshold value, determine that the user in question is an authorized user and allow him to use the information apparatus. When the result of each evaluation of the degree of difference is higher than the predetermined threshold value, determine that the user in question is a false user and refuse use of the information apparatus.

More specifically, obtain a weighted sum of the degree of difference (or the degree of similarity) between fingerprint features of an authorized user and fingerprint features of a user whose fingerprint is input this time and the degree of difference (or the degree of similarity) between a sweep pattern of the authorized user and a sweep pattern of the user whose fingerprint is input this time to compare the obtained sum with a preset threshold value. Then, when the degree of difference (or the degree of similarity) taking both the elements into consideration is lower than the threshold value (in a case of the degree of similarity, higher than the threshold value), consider the user as the authorized user to allow him to use the information apparatus on which the present user authentication device is mounted (to enable operation of the device). Conversely, when the degree of difference (or the degree of similarity) is higher than the threshold value (in a case of the degree of similarity, lower than the threshold value), conduct predetermined operation such as giving no permission because of lack of coincidence (disabling operation of the device).

As to the threshold value for use in authentication based on the above-described degree of difference (or the degree of similarity), with a threshold value set too low (in a case using the degree of similarity, set too high), even when an authorized user himself inputs a sweep pattern by the same movement as that of the registration, authentication for refusal will be given because making completely the same movement is impossible. Conversely, with a threshold value for the above-described degree of difference (or the degree of similarity) set too high (in a case using the degree of similarity, set too low), when other person than the authorized user inputs a sweep pattern, authentication for allowance will be given with ease.

Assume therefore that the above-described threshold value is set to have such balance as giving no permission to other person than an authorized user with ease without refusing authentication of the authorized user himself.

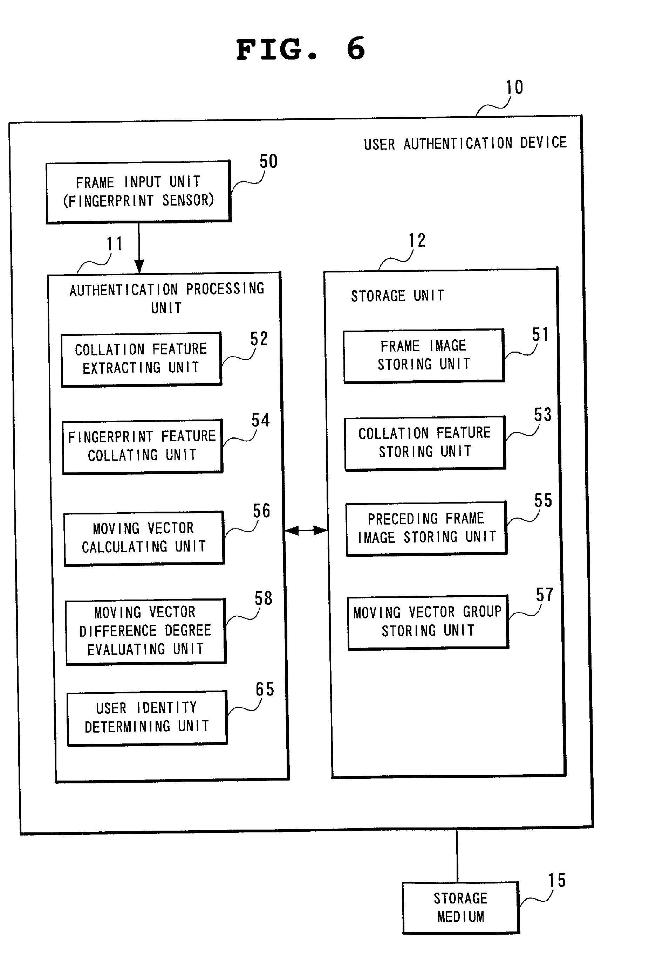

Next, description will be made of an embodiment of a user authentication device realizing operation of the above-described method with reference to Figs. 5 and 6. Fig. 5 is a functional block diagram showing a user authentication device according to the first embodiment, while Fig. 6 is a diagram showing an entire structure of the user authentication device according to the first embodiment.

A user authentication device 10 according to the first embodiment includes the frame input unit 50, a frame image storing unit 51, a collation feature extracting unit 52, a collation feature storing unit 53, a fingerprint feature collating unit 54, a preceding frame image storing unit 55, a moving vector calculating unit 56, a moving vector group storing unit 57, a moving vector difference degree evaluating unit 58 and a user identity determining unit 65.

Then, as shown in Fig. 6, the user authentication unit 10 is composed of the frame input unit 50, an authentication processing unit 11 implemented by a program-controlled CPU or the like and a storage unit 12, with the authentication processing unit (CPU) 11 having the above-described collation feature extracting unit 52, fingerprint feature collating unit 54, moving vector calculating unit 56, moving vector difference degree evaluating unit 58 and user identity determining unit 65 and the storage unit 12 having the above-described frame image storing unit 51, collation feature storing unit 53, preceding frame image storing unit 55 and moving vector group storing unit 57.

The frame input unit 50 as a fingerprint sensor is a part for receiving input of a fingerprint image for the confirmation of a person in question. The part has such a function of successively obtaining partial images of a moving target to be captured as a camera and a scanner and has such an outer configuration as that of the frame input unit 50 shown in Fig. 3, for example. Size of the frame input unit 50 is, for example, smaller than the whole part of a fingerprint of a finger.

A still picture of a finger of the user put on the frame input unit 50 can be captured by the unit or when the user moves his finger (sweeping movement) in a direction, for example, that indicated by the arrow (or in the reverse direction) in Fig. 3 relatively to the frame input unit 50, a plurality of fingerprint images (each individual fingerprint partial image will be referred to as a frame) successively captured with the movement can be obtained.

The frame input unit 50 converts irregularities corresponding to ridge lines of a finger put thereon into image densities to capture the image at preset capture timing. As the method implementing the operation, the technique recited in Japanese Patent Laying-Open (Kokai) No. 2000-217803, for example, is used. Other methods have been also put to practical use including a method using prisms and a method using capacitance. The latest frame image applied is stored in the frame image storing unit 51.

The collation feature extracting unit 52 extracts features for collation from a two-dimensional image held in the frame image storing unit 51. The collation feature storing unit 53 is a part for extracting features for collation from a fingerprint image of an authorized user of the information apparatus and storing the same in advance. At the registration of collation features, collation features extracted by the collation feature extracting unit 52 are stored in the collation feature storing unit 53 as indicated by a broken arrow.

The fingerprint feature collating unit 54 collates fingerprint features of an authorized user held in the collation feature storing unit 53 and fingerprint features of a user whose fingerprint is input this time which are calculated by the collation feature extracting unit 52 to output its degree of difference (or conversely, the degree of similarity).

Used as an example of implementation of a fingerprint matching device including the collation feature extracting unit 52 and the fingerprint feature collating unit 54 is, for example, "Fingerprint matching Device" recited in Japanese Patent Laying-Open (Kokai) No. Showa 56-24675 or that recited in Japanese Patent Laying-Open (Kokai) No. Heisei 4-33065. According to these techniques, at the collation of fingerprints or the like, by examining, together with positions X and Y and a direction D of each feature point characterizing a fingerprint pattern, the number of ridge lines between the most proximate point in the vicinity of a divisional fan-shaped region obtained by dividing a local coordinate system inherently determined by each feature point and the feature point, that is, examining a relation, stable and highly precise collation is enabled.

The preceding frame image storing unit 55 stores, with respect to a frame image successively captured by the frame input unit 50, an image immediately precedent to the current frame. More specifically, when the image g(n) exists in the frame image storing unit 51, its immediately preceding image g(n-1) is stored in the preceding frame image storing unit 55.

The moving vector calculating unit 56 registers the frame image g(n-1) recorded in the preceding frame image storing unit 55 and the image g(n) existing in the frame image storing unit 51 to calculate a moving vector between the images.

As a method of implementing the above-described operation, a sequential similarity detection algorithm (SSDA) can be used. This method is intended, in a case of calculating a moving vector from, for example, the image g(n-1) to the image g(n), to register the image g(n-1) and the image g(n) while gradually moving the image g(n) in parallel with the image g(n-1) and regard a vector (or inverse vector) of parallel displacement obtained at a time when the two are registered best as a moving vector between the frames.

In order to realize the operation, with an image obtained by parallel displacement of the image g(n) by i in the x direction and by j in the y direction represented as g(n; i, j), calculate the following mathematical expression as an accumulation of a difference between density values (called "penalty") of two images obtained as a result of parallel displacement of g(n; i, j) by (x, y):

$$c(x,y)=\Sigma\Sigma|g(n-1;i,j)-g(n;i-x,j-y)|$$

obtain (x, y) at which the penalty is the smallest and regard the obtained (x, y) as a moving vector (an accumulated sum is obtained with respect to i and j within a fixed area of a region in which g(n-1; i, j) and g(n; i, j) overlap with each other). For the realization of the registration, other method such as a cross-correlation method can be used in place of SSDA.

When the user conducts sweeping with respect to the frame input unit 50, a moving vector is calculated for each frame from a series of frames successively obtained from a moving picture to determine a series of the vectors. The series of vectors forms a sweep pattern.

The moving vector group storing unit 57 is a part for obtaining a group of moving vectors from a sweep pattern of an authorized user of the information apparatus as of the registration and storing the same in advance. At the registration, a series of vectors obtained by the moving vector calculating unit 56 is stored in the moving vector group storing unit 57 as indicated by a broken arrow in Fig. 5.

The moving vector difference degree calculating unit 58 evaluates, at the time of user authentication, a degree of difference between a group of moving vectors describing a sweep pattern of an authorized user held in the moving vector group storing unit 57 and a group of moving vectors describing a sweep pattern of a user whose sweep pattern is input this time which is calculated by the moving vector calculating unit 56.

At the moving vector difference degree calculating unit 58, the degree of difference can be calculated by, for example, adding each vector in the vector group in a time serial order, smoothing an obtained polygonal line to obtain an approximate curve of a locus (which represents a locus of a sweep pattern) and accumulating a distance difference at fixed intervals between approximate curves obtained from both vector groups.

Such a method enables a degree of coincidence to be quantitatively evaluated. For example, when two sweep patterns expressed by two moving vector groups are approximate to each other, the degree of difference is determined to be low and when they are not approximate to each other, the degree of difference is determined to be high.

The user identity determining unit 65 obtains a weighted sum of a degree of difference (or a degree of similarity) obtained by the fingerprint feature collating unit 54 between fingerprint features of an authorized user and fingerprint features of a user whose fingerprint is input this time and a degree of difference (or a degree of similarity) obtained by the moving vector difference degree calculating unit 58 between a sweep pattern of the authorized user and a sweep pattern of the user whose fingerprint is input this time and compares the obtained sum with a preset threshold value. Then, as a result of the comparison, when the degree of difference (or the degree of similarity) taking both elements into consideration is lower than the threshold value (in a case of the degree of similarity, when higher than the threshold value), the unit considers the user in question as the authorized user and allows him to use the information apparatus on which the present user authentication device is mounted (enabling operation of the device). Conversely, when the degree of difference (or the degree of similarity) is higher than the threshold value (in a case of the degree of similarity, lower than the threshold value), the unit conducts predetermined operation such as refraining from making allowance (disabling operation of the device) because of lack of coincidence.

It is also possible to conduct operation of instructing a user, when only a degree of difference related to a sweep pattern is high (or a degree of similarity is low), to input a fingerprint by a sweep because a series of sweeps is unsatisfactorily input and when a degree of difference of the further applied sweep pattern is also high (or the degree of similarity is low), pointing out a possibility of input of a false finger by other person than an authorized user and refusing the operation of the information apparatus and services provided by the information apparatus.

Such a sweep pattern as described above can be handled as secret information known only to a person in question and personal information appropriately reproducible only by the person in question. Therefore, when related to the static fingerprint features as of the start of sweeping and the sweep pattern, applied patterns as of registration and authentication satisfactorily coincide with each other, the person in question can be more precisely authenticated. As a result, such a false finger as described above can be eliminated to realize more reliable user authentication.

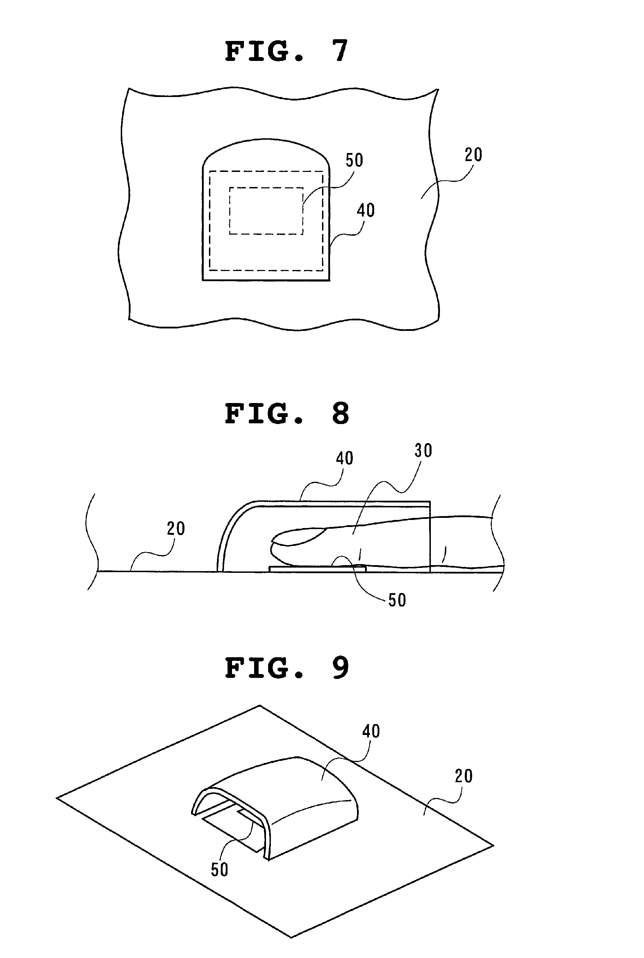

The present user authentication device 10 is to be mounted on a personal information apparatus such as an information terminal, a videogame player and a portable telephone and when the device is to be mounted thereon, the frame input unit 50 as a fingerprint sensor is to be disposed being exposed on a casing 20 of the information apparatus mounted with the device as shown in Fig. 7.

In the first embodiment, a cover 40 is provided so as to cover the frame input unit 50 disposed at the casing 20 as illustrated in Figs. 7 to 9. The cover 40 is intended to prevent sweeping movement of a finger 30 put on the frame input unit 50 from being seen from the outside and is designed to have an area allowing the finger 30 inserted into the cover to move within a predetermined range.

Provision of such a cover 40 over the frame input unit 50 enables movement of a finger of an authorized user at the registration of his sweep pattern to be concealed. It is therefore possible to prevent a false user from imitating authorized user's finger movement, thereby enhancing secrecy of a sweep pattern.

(Second Embodiment)

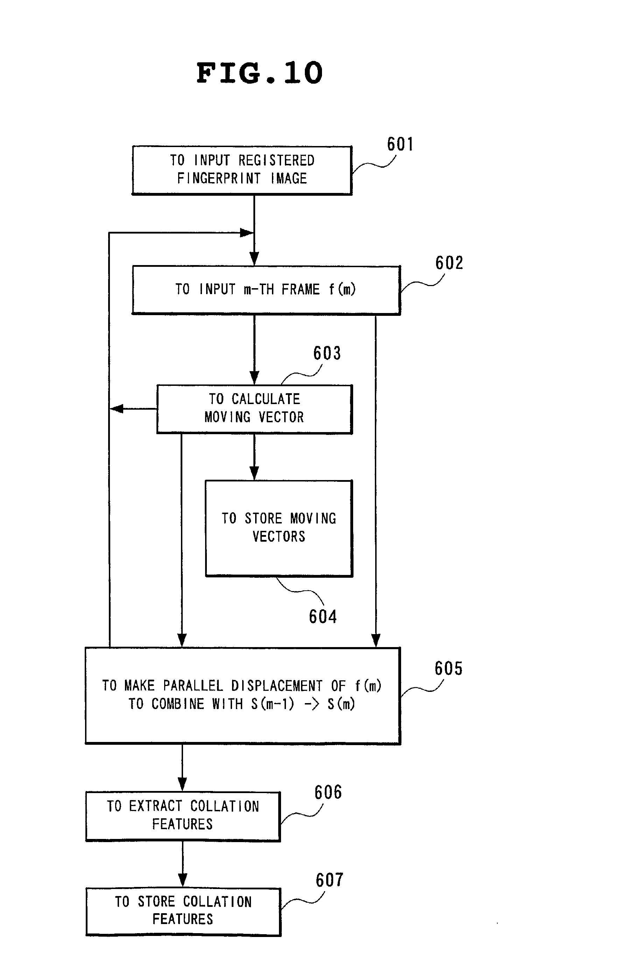

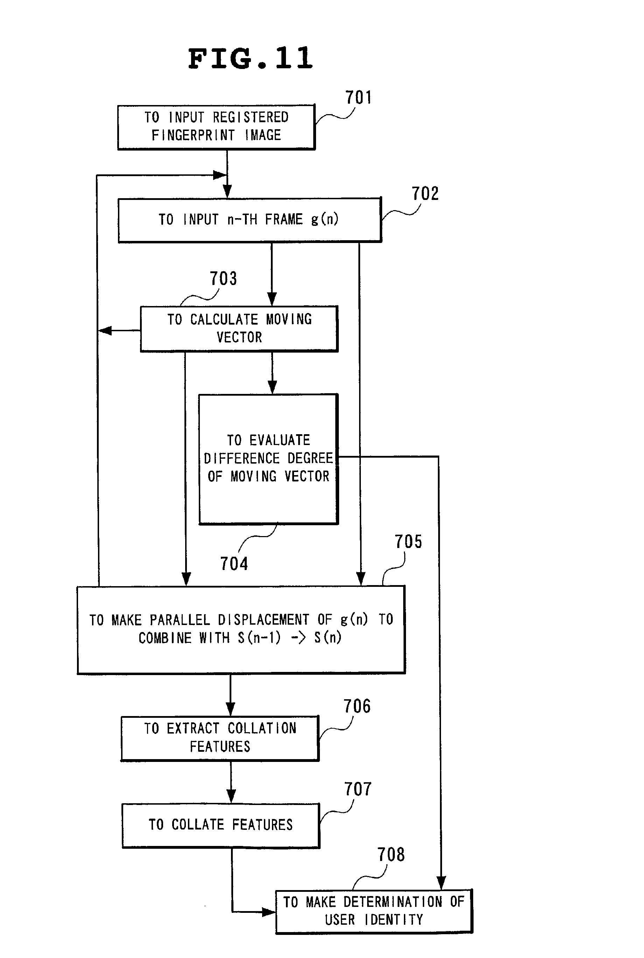

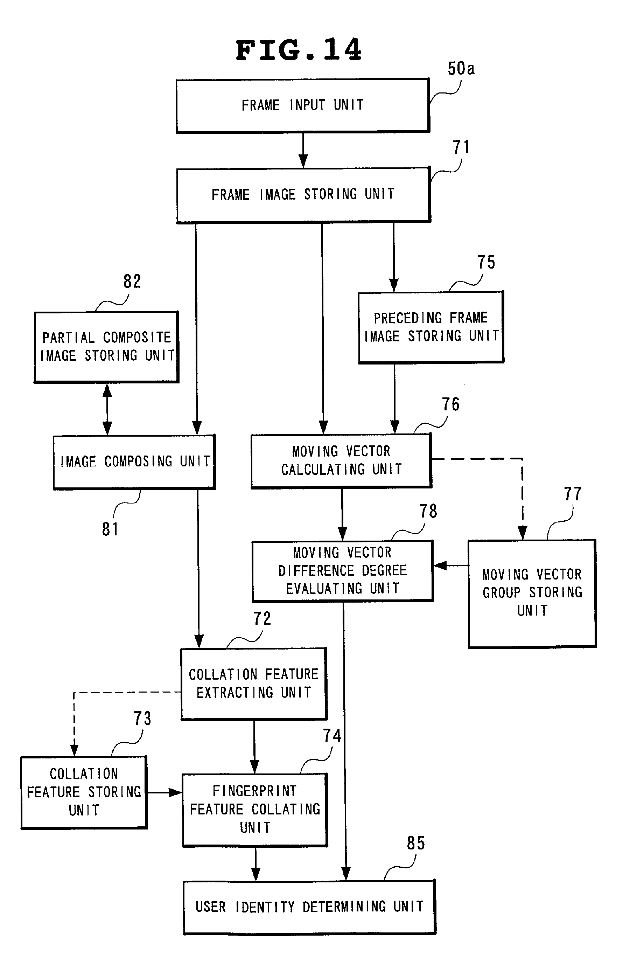

With reference to Figs. 10 to 14, a second embodiment of the present invention will be described. Figs. 10 and 11 are flow charts showing a flow of processing of a user authentication method according to the second embodiment and Fig. 14 is a block diagram showing a structure of a user authentication device according to the second embodiment.

With reference to Figs. 10 and 11, description will be made of the contents of the user authentication method according to the second embodiment in comparison with the first embodiment.

An owner registers his fingerprint data and sweep pattern at a device in advance in a manner as described in the following at the start of use of an information apparatus or on other occasion.

Here, description will be made of a procedure of registering fingerprint data and a sweep pattern with reference to Fig. 10.

When a user as the owner of the information apparatus puts a part of the surface of his finger 30 on a frame input unit 50a (fingerprint sensor) for fingerprints to bring the same into contact with the sensor, its captured image is input through the frame input unit 50a (Step 601). Here, the first applied image data is assumed to be an image f(0) for the sake of convenience.

Subsequently, the user two-dimensionally sweeps his finger 30 put on the frame input unit 50a relatively to the frame input unit 50a with the finger being in contact with the frame input unit 50a.

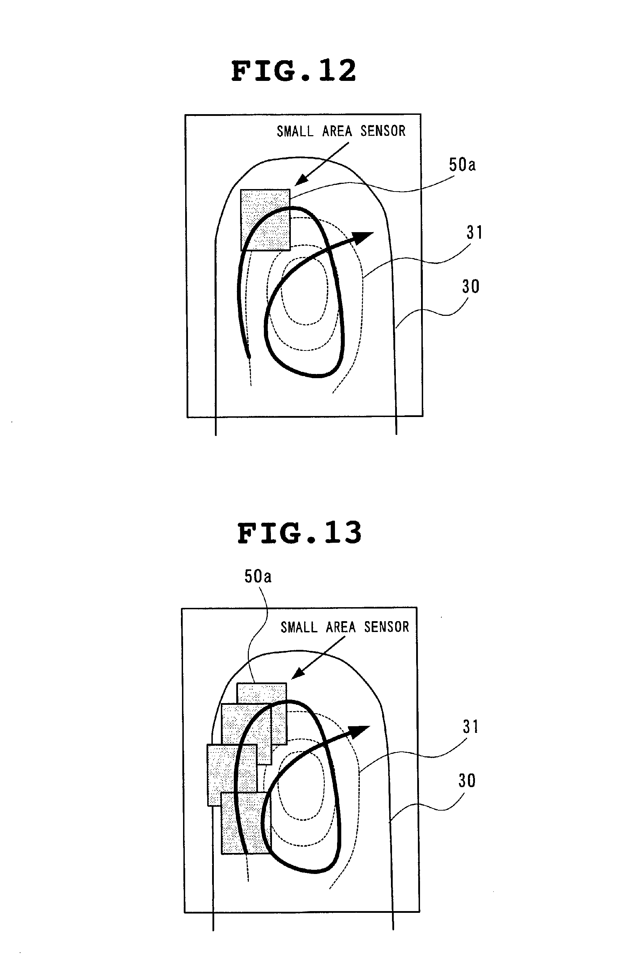

The present embodiment takes a case where an area of the frame input unit 50a is further smaller than that of the first embodiment into consideration. As illustrated in Fig. 12, when the finger 30 is swept on the frame input unit 50a, a frame as a partial image of the fingerprint captured by the frame input unit 50a is successively input as time passes (Step 601). A series of these frames successively input is denoted as f(1) ~ f(m) ~ f(M). Assume in general that the finger is swept at a speed not too fast such that a time interval between frames is short enough and that adjacent frames have considerable captured areas overlapping with each other (i.e. such that an overlap of captured areas can be obtained that can be precisely calculated by a moving vector which will be described later).

When a certain frame f(m) is input (Step 602), a corresponding point between f(m-1), i.e. the preceding frame, and the current frame is searched to calculate a moving vector of relative motion of the finger (Step 603). In the calculation of a moving vector, when the number of corresponding points between the preceding frame and the current frame is smaller than a predetermined value necessary at least for calculating the moving vector, the user is asked to again input the image.

Storing a series of these moving vectors (a group of moving vectors) with respect to each frame leads to expressing movement of the finger in sweeping movement. The group of the moving vectors indicative of a sweep pattern is stored for use in user authentication similarly to the first embodiment (Step 604).

On the other hand, by sequentially registering the input series of frame images so as to have their overlaps most highly correlated with each other and combining them, obtain a composite image covering a larger area of the original fingerprint. For this purpose, register adjacent frames while displacing them as much as the moving vector calculated above to compose an image (Step 605). Specific method of realizing the operation will be described later.

After composing a fingerprint image of a large area from successive frame images following sweeping movement, extract features for collation with respect to the composite resultant image (Step 602) and store the same (Step 607). Fig. 13 shows how the features are extracted, and composing the respective frames input by sweeping movement shown in Fig. 12 results in obtaining such a composite resultant image represented as a gray region as can be seen from Fig. 13 showing a transitional result.

On the other hand, when a certain user uses a function of the information apparatus which requires user authentication, the following user authentication processing is executed for the user as shown in Fig. 11.

When the user puts the same part of the surface of the finger on the frame input unit 50a similarly to that in the registration operation, the captured image of the fingerprint is input (Step 701). Here, the image is assumed to be an image g(0) for the sake of convenience.

Subsequently, the user sweeps his finger put on the frame input unit 50a in the same manner as in the registration operation. By sweeping the finger on the frame input unit, a frame as a partial image of the fingerprint captured by the frame input unit is successively input as time passes similarly to that at the registration (Step 702). A series of these frames is represented as g(1) ~ g(n) ~ g(N).

With respect to each frame g(n) applied, its corresponding point to its preceding frame is searched to calculate a moving vector of relative motion of the finger similarly to that at the registration (Step 703).

By comparing the series of these moving vectors with the already stored series of the moving vectors as of the registration, evaluate a degree of difference between sweep patterns as of the registration and as of the user authentication (Step 704).

On the other hand, by registering the input series of frame images and combining them similarly to that at the registration, compose a fingerprint image of a large area which covers a larger area of the original fingerprint (Step 705).

Then, extract features for collation with respect to the composite resultant image (Step 706) and collate them with the previously stored collation features (Step 707) to evaluate its degree of difference (Step 707).

Then, at user authentication, make determination of user's identity based on the above-described results of evaluation of the degree of difference in sweep patterns and results of evaluation of the degree of difference in feature collation (Step 708).

In user's identity determination, when each result of the evaluation of the degree of difference is lower than a predetermined threshold value, determine that the user in question is an authorized user and allow him to use the information apparatus and when each result of the evaluation of the degree of difference is higher than the predetermined threshold value, determine that the user in question is a false user to refuse use of the information apparatus, which is the same as in the first embodiment.

More specifically, obtain a weighted sum of the degree of difference (or the degree of similarity) between a sweep pattern of an authorized user and a sweep pattern of a user whose fingerprint is input this time and the degree of difference (or the degree of similarity) between fingerprint features of a composite image composed based on the sweep of the authorized user and fingerprint features of a composite image composed based on the sweep of the user whose fingerprint is input this time to compare the obtained sum with a preset threshold value and when the degree of difference taking both elements into consideration is lower than the threshold value (in a case of the degree of similarity, when higher than the threshold value), allow the user as the authorized user to use the information apparatus. Conversely, when the degree of difference (or the degree of similarity) is higher than the threshold value (in a case of the degree of similarity, lower than the threshold value), conduct predetermined operation such as giving no permission because of lack of coincidence (disabling operation of the device).

Next, description will be made of a user authentication device realizing operation of the above-described method with reference to Fig. 14.

A user authentication device according to the second embodiment includes the frame input unit 50a, a frame image storing unit 71, a collation feature extracting unit 72, a collation feature storing unit 73, a fingerprint feature collating unit 74, a preceding frame image storing unit 75, a moving vector calculating unit 76, a moving vector group storing unit 77, a moving vector difference degree evaluating unit 78, an image composing unit 81, a partial composite image storing unit 82 and a user identity determining unit 85.

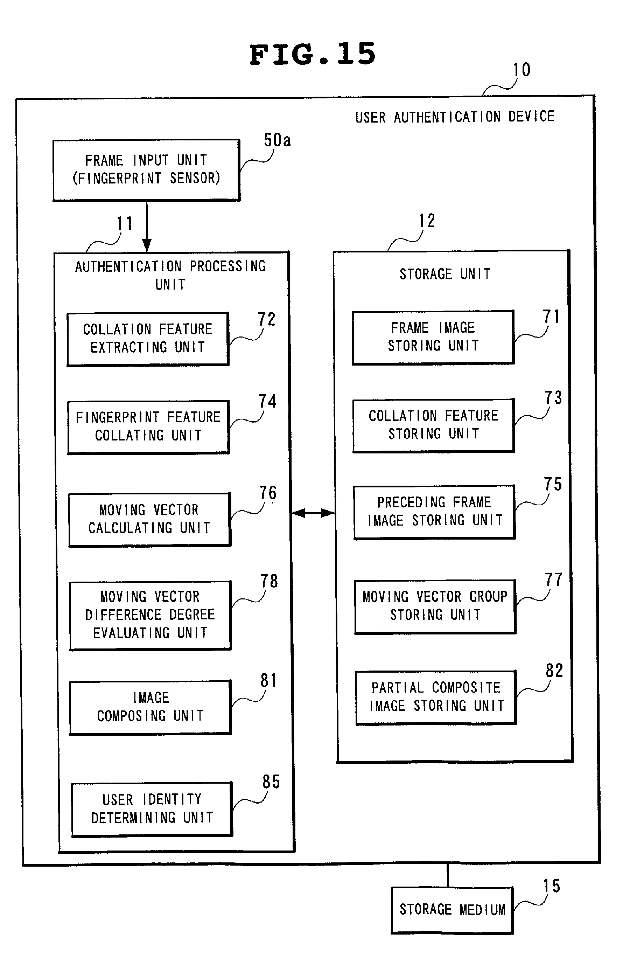

Then, as shown in Fig. 15, the user authentication device 10 is composed of the frame input unit 50a, the authentication processing unit 11 implemented by a program-controlled CPU or the like and the storage unit 12, with the authentication processing unit (CPU) 11 having the above-described collation feature extracting unit 72, fingerprint feature collating unit 74, moving vector calculating unit 76, moving vector difference degree evaluating unit 78, image composing unit 81 and user identity determining unit 85 and the storage unit 12 having the above-described frame image storing unit 71, collation feature storing unit 73, preceding frame image storing unit 75, moving vector group storing unit 77 and partial composite image storing unit 82.

The frame input unit 50a is a part for receiving input of a fingerprint image for the confirmation of a person in question. The part has, for example, such an outer configuration as that of the frame input unit 50a shown in Fig. 12. Used as the frame input unit 50a is a unit smaller than the whole part of a fingerprint of a finger and further smaller than the frame input unit 50 of the first embodiment.

The input frame image is stored in the frame image storing unit 71. The preceding frame image storing unit 75, the moving vector calculating unit 76, the moving vector group storing unit 77 and the moving vector difference degree evaluating unit 78 are the same as their counterparts in the first embodiment.

When the image f(n) of the n-th frame, for example, is stored in the frame image storing unit, the partial composite image storing unit 82 holds a resultant image S(n-1) obtained by composing frame images f(0) to f(n-1). The image composing unit 81 displaces the image f(n) in the frame image storing unit in parallel by the moving vector equivalent to displacement between f(n) and f(n-1) calculated by the moving vector calculating unit 76 and combines the displaced image f(n) and S(n-1) in the partial composite image storing unit to obtain a new partial composite image S(n). One example of how the images are composed is shown in Fig. 13. Here, a light gray portion as a sum of sets of first three frame images represents a partial composite image S(n-1) which is composed using the frame image groups f(1) ~ f(n-1) and which is held in the partial composite image storing unit 82 and a rectangle indicated by an arrow represents f(n).

Possible composition method is, for example, extending S(n-1) by adding a new region of f(n) which will not overlap with S(n-1). The composition result is written as S(n) having a larger area than S(n-1) into the partial composite image storing unit 82.

Applicable as such a technique of composing partial images of small areas to obtain a fingerprint image of a large area is the art recited in Japanese Patent Laying-Open (Kokai) No. Heisei 10-143663, entitled "Fingerprint Information Processing Device".

After sweeping is completed, the collation feature extracting unit 72 extracts features for collation from a two-dimensional image as a final composition result. The collation feature storing unit 73 is a part for extracting features for collation from a fingerprint image of an authorized user of the information apparatus and storing the same in advance. At the registration, collation features extracted by the collation feature extracting unit 72 are stored in the collation feature storing unit 73.

The fingerprint feature collating unit 74 collates the fingerprint features of the authorized user held in the collation feature storing unit and fingerprint features of a user whose fingerprint is input this time which are calculated by the collation feature extracting unit to output its degree of difference (or conversely a degree of similarity) in the same manner as described above.

The user identity determining unit 85 obtains a weighted sum of a degree of difference (or a degree of similarity) obtained by the moving vector difference degree evaluating unit 78 between a sweep pattern of an authorized user and a sweep pattern of a user whose fingerprint is input this time and a degree of difference (or a degree of similarity) obtained by the fingerprint feature collating unit 74 between fingerprint features in a composite image composed using the sweep of the authorized user and fingerprint features of a composite image composed using the sweep of the user whose fingerprint is input this time. The unit 85 compares the obtained result with a preset threshold value and as a result of the comparison, when the degree of difference taking both elements into consideration is lower than the threshold value (in a case of the degree of similarity, when higher than the threshold value), the unit considers the user in question as the authorized user and allows him to use the information apparatus. Conversely, when the degree of difference (or the degree of similarity) is higher than the threshold value (in a case of the degree of similarity, lower than the threshold value), the unit conducts predetermined operation such as refraining from making allowance (disabling operation of the device) because of lack of coincidence.

Although in the foregoing description, determination is made at user authentication after sweeping is completed, it is also possible to make evaluation calculation of both degrees of difference at each frame input in line with input by sweeping movement and when an obtained weighted sum exceeds a threshold value, output a determination result that the person whose fingerprint is input is other than the authorized user and when sweeping ends without having the sum exceeding the threshold value, determine that the user is the authorized user himself.

As well as the first embodiment, the second embodiment enables movement of a finger of the authorized user at the registration of a sweep pattern to be concealed by providing a cover covering over the frame input unit 50a disposed on a casing of the information apparatus. It is therefore possible to prevent a false user from imitating finger movement, thereby enhancing secrecy of a sweep pattern.

(Third Embodiment)

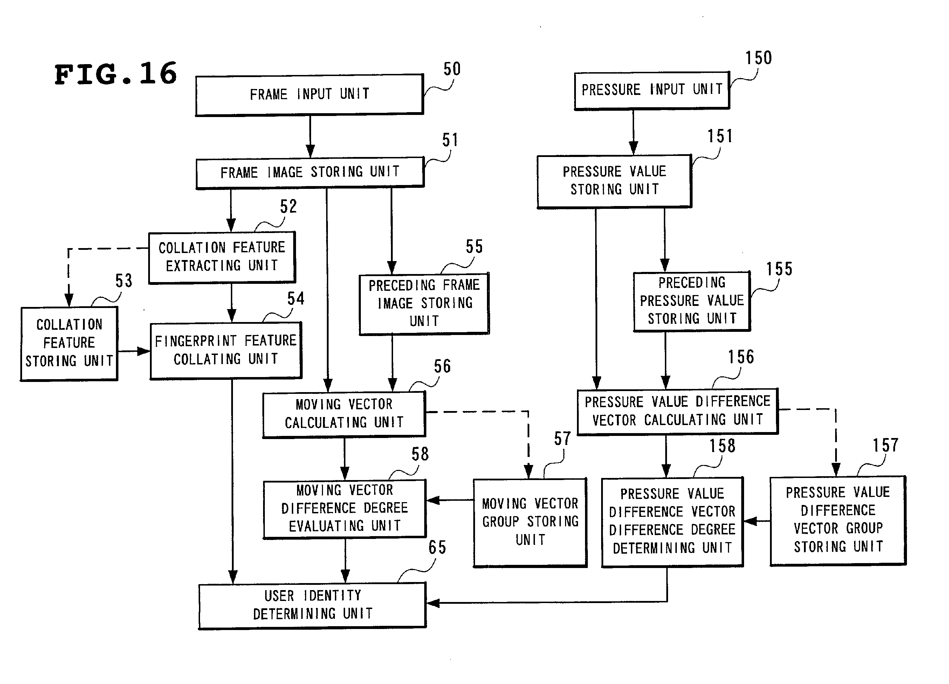

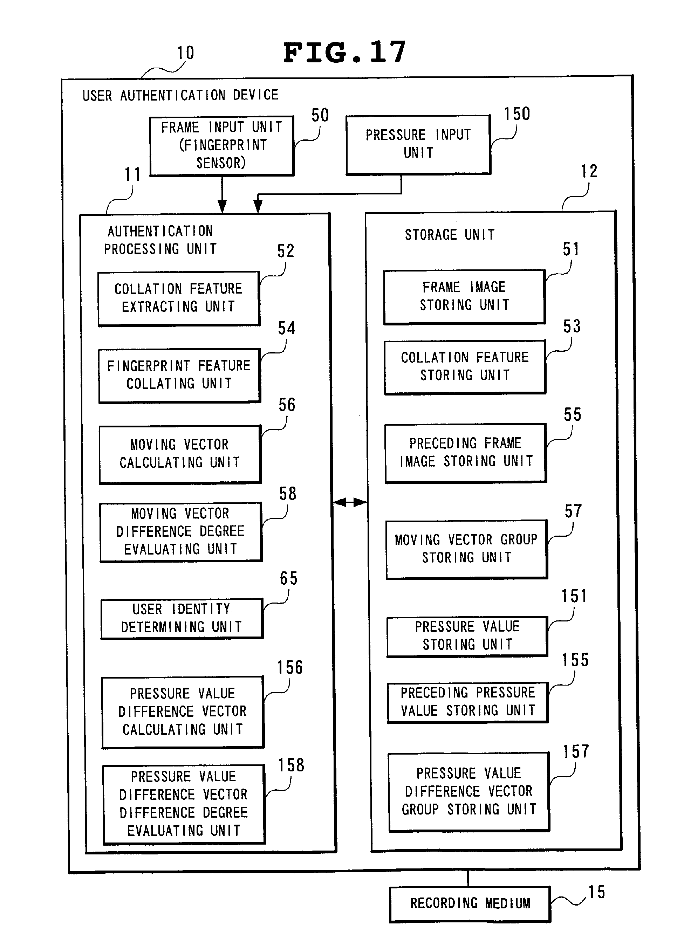

A user authentication device according to a third embodiment of the present invention will be described with reference to Figs. 16 and 17. Fig. 16 is a functional block diagram showing the user authentication device according to the third embodiment and Fig. 17 is a diagram showing an entire structure of the user authentication device according to the third embodiment.

The user authentication device 10 according to the third embodiment is structured, as the expansion of the user authentication device according to the first embodiment, to use a pressure value difference vector for authentication, which is a time series change of a pressure value obtained from a finger being swept.

More specifically, as shown in Fig. 16, the user authentication device 10 of the present embodiment includes, in addition to the components of the first embodiment, a pressure input unit (pressure sensor) 150, a pressure value storing unit 151, a preceding pressure value storing unit 155, a pressure value difference vector calculating unit 156, a pressure value difference vector group storing unit 157 and a pressure value difference vector difference degree evaluating unit 158. The component common to that of the first embodiment is given the same reference numeral whose description will not be made here.

Then, as illustrated in Fig. 17, the user authentication device 10 has the pressure input unit 150 in addition to the components shown in Fig. 6, as well as including the authentication processing unit 11 realized by a program-controlled CPU or the like and the storage unit 12, with the authentication processing unit (CPU) 11 having the pressure value difference vector calculating unit 156 and the pressure value difference vector difference degree evaluating unit 158 other than the above-described collation feature extracting unit 52, fingerprint feature collating unit 54, moving vector calculating unit 56, moving vector difference degree evaluating unit 58 and user identity determining unit 65 and the storage unit 12 having the pressure value storing unit 151, the preceding pressure value storing unit 155 and the pressure value difference vector group storing unit 157 other than the above-described frame image storing unit 51, collation feature storing unit 53, preceding frame image storing unit 55 and moving vector group storing unit 57.

In the following, description will be made only of a point different from the first embodiment.

The pressure input unit 150 which is a pressure sensor is a part for receiving input of a pressure value for the confirmation of a person in question. The unit has a function of successively obtaining pressure values of a moving finger and is formed integrally with the frame input unit 50 shown in Fig. 3, for example.

The pressure input unit 150 detect a pressure value of a finger put thereon at preset timing. The input pressure value is stored in the pressure value storing unit 151.

The preceding pressure value storing unit 155 stores a pressure value obtained immediately before a current pressure value among pressure values successively obtained by the pressure input unit 150. More specifically, when a pressure value p(n) exists in the pressure value storing unit 151, stored in the preceding pressure value storing unit 155 is its immediately preceding pressure value p(n-1).

The pressure value difference vector calculating unit 156 calculates a pressure value difference vector indicative of a time series change of the pressure value p(n-1) recorded in the preceding pressure value storing unit 155 and the pressure value p(n) existing in the pressure value storing unit 151. To the calculation of the pressure value difference vector, the above-described moving vector calculation method is applicable.

When the user makes sweeping movement on the pressure input unit 150 (frame input unit 50), a pressure value difference vector is calculated from a string of successively obtained pressure values to determine its series. The vector series is assumed to be a pressure value pattern.

The pressure value difference vector group storing unit 157 is a part for in advance obtaining a pressure value difference vector group from a pressure value pattern of an authorized user of the information apparatus obtained at the registration and storing the same. At the registration, as indicated by a broken arrow in Fig. 16, a vector series obtained by the pressure value difference vector calculating unit 156 is stored in the pressure value difference vector group storing unit 157.

The pressure value difference vector difference degree evaluating unit 158, at the time of user authentication, evaluates a degree of difference with respect to a pressure value difference vector group which describes a pressure value pattern of an authorized user held in the pressure value difference vector group storing unit 157 and a pressure value difference vector group which describes a pressure value pattern of a user whose pressure value pattern is input this time which is calculated by the pressure value difference vector calculating unit 156.

The pressure value difference vector difference degree evaluating unit 158 is allowed to calculate a degree of difference by, for example, adding the respective vectors in the vector group in a time serial order, smoothing an obtained polygonal line to obtain an approximate curve of a locus and accumulating a pressure difference at fixed intervals of the approximate curves obtained from both vector groups.

With such a method, when two pressure value patterns represented by two pressure value difference vector groups are approximate to each other, the degree of difference is determined to be low and when they are not approximate to each other, the degree of difference is determined to be high, which realizes quantitative evaluation of a degree of coincidence between two pressure value patterns.

The user identity determining unit 65 obtains a weighted sum of three degrees of difference (or degrees of similarity) including a degree of difference (or a degree of similarity) between a pressure value pattern of an authorized user and a pressure value pattern of a user whose fingerprint is input this time in addition to a degree of difference (or a degree of similarity) between fingerprint features of the authorized user and fingerprint features of the user whose fingerprint is input this time and a degree of difference (or a degree of similarity) between a sweep pattern of the authorized user and a sweep pattern of the user whose fingerprint is input this time and compares the obtained sum with a preset threshold value.

Then, as a result of the comparison, when the degree of difference (or the degree of similarity) taking the three elements into consideration is lower than the threshold value (in a case of the degree of similarity, higher than the threshold value), regard the user as an authorized user and allow him to use the information apparatus on which the present user authentication device is mounted (enable operation of the device). Conversely, when the degree of difference (or the degree of similarity) is higher than the threshold value (in a case of the degree of similarity, lower than the threshold value), conduct predetermined operation such as refraining from making allowance (disabling operation of the device) because of lack of coincidence.

It is also possible, similarly to a case of a sweep pattern, when only a degree of difference in a pressure value pattern is high (or a degree of similarity is low), to instruct the user to again input a pressure value by sweeping because the input of a series of pressure values is unsatisfactory and when a degree of difference of the again input pressure value pattern is also high (or a degree of similarity is low), point out a possibility of input of a false finger by other person than the authorized user to refuse operation of the information apparatus and services provided by the information apparatus.

Such a pressure value pattern as described above can be handled as secret information known only to a person in question and as personal information appropriately reproducible only by the person in question. Therefore, when related to three elements including a pressure value pattern in addition to static fingerprint features as of the start of sweeping and a sweep pattern, input patterns as of the registration and the authentication satisfactorily coincide with each other, the person in question can be authenticated more precisely. As a result, such false finger as described above can be eliminated to realize more reliable user authentication.

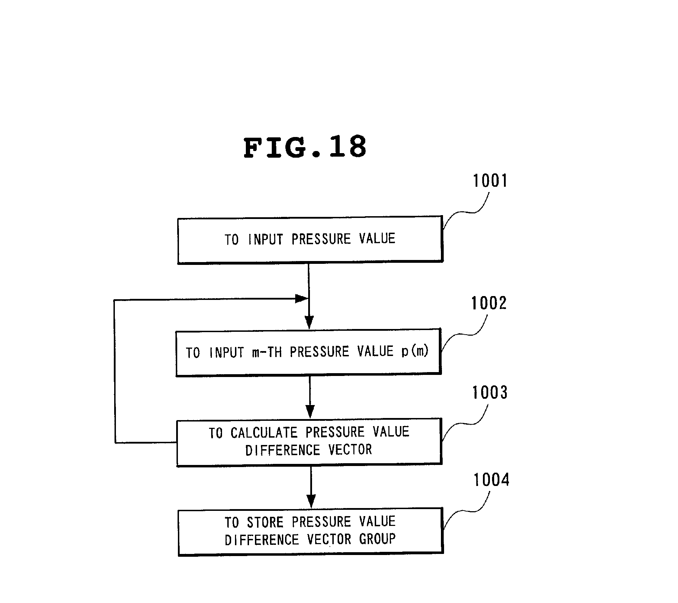

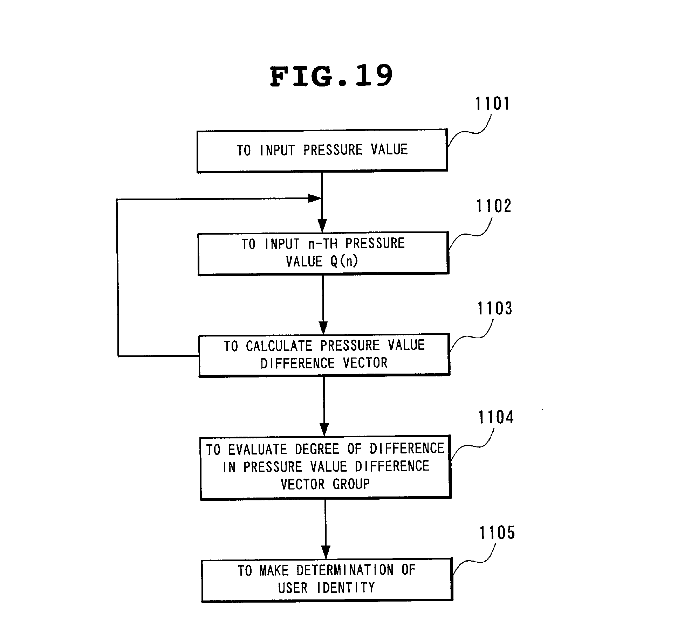

First with reference to Figs. 18 and 19, description will be made of the contents of the user authentication method according to the present embodiment. Here, description will be made only of user authentication using a pressure value pattern.

An owner registers his pressure value pattern in addition to his fingerprint data and sweep pattern at a device in advance in a manner as described in the following at the start of use of an information apparatus or on other occasion.

Here, description will be made of a procedure of registering a pressure value pattern with reference to Fig. 18.

A user as the owner of the information apparatus puts a part of the surface of his finger on the pressure input unit 150 (frame input unit 50) provided for inputting a pressure value to bring the same into contact with the unit and two-dimensionally moves his finger relatively to the pressure input unit with his finger being in contact with the pressure input unit 150. In other words, the user makes sweeping movement as shown in Fig. 3.

When the finger is swept on the pressure input unit 150, a pressure value detected by the pressure input unit 150 is successively input as time passes (Step 1001). A series of these pressure values successively input is denoted as $p(1) \sim p(m) \sim p(M)$. Assume in general that the finger is swept at a speed not too fast such that a time interval between pressure values is short enough, that is, such a time interval is obtained that a pressure value difference vector which will be described later can be calculated precisely.

When a certain pressure value $p(m)$ is input (Step 1002), a pressure value difference vector as a time series change between $p(m-1)$, i.e. the preceding pressure value and the current pressure value $p(m)$ is calculated (Step 1003).

Then, store a series of pressure value difference vectors (a group of pressure value difference vectors) of each pressure value as a pressure value pattern (Step 1004). The foregoing is a procedure of registering a pressure value pattern for user authentication.

On the other hand, when a certain user uses a function of the information apparatus which requires user authentication, such user authentication processing as shown in Fig. 19 using a pressure value pattern will be executed for the user in the following manner.

By the user's sweeping of his finger put on the pressure input unit 150 in the same manner as in the registration operation, a pressure value detected by the pressure input unit 150 is successively input as time passes (Step 1101). Here, a series of these pressure values is represented as $p(1) \sim p(n) \sim p(N)$.

With respect to the input of each pressure value $p(n)$ (Step 1102), a pressure value difference vector as a time series change between the preceding pressure value $p(n-1)$ and the current pressure value $p(n)$ is calculated similarly to that at the registration (Step 1103).

By comparing the series of pressure value difference vectors with a stored series of pressure value difference vectors as of the registration, evaluate a degree of difference between pressure value patterns as of the registration and the user authentication (Step 1104).

Then, at the user authentication, make determination of user identity based on the result of the evaluation of the degree of difference in pressure pattern in addition to the above-described result of the evaluation of the degree of difference in feature collation and result of the evaluation of the degree of difference in sweep pattern (Step 1105). In the determination of user's identity, when each result of the evaluation of the degree of difference is lower than a predetermined threshold, determine that the user in question is an authorized user and allow him to use the information apparatus. When each result of the evaluation of the degree of difference is higher than the predetermined threshold, determine that the user in question is a false user and refuse use of the information apparatus.

Although the above-described third embodiment has a structure with authentication using a pressure value added to the structure of the first embodiment, it is as a matter of course possible to add authentication using a pressure value to the user authentication according to the second embodiment. Also in this case, more reliable user authentication is realized.

(Fourth Embodiment)

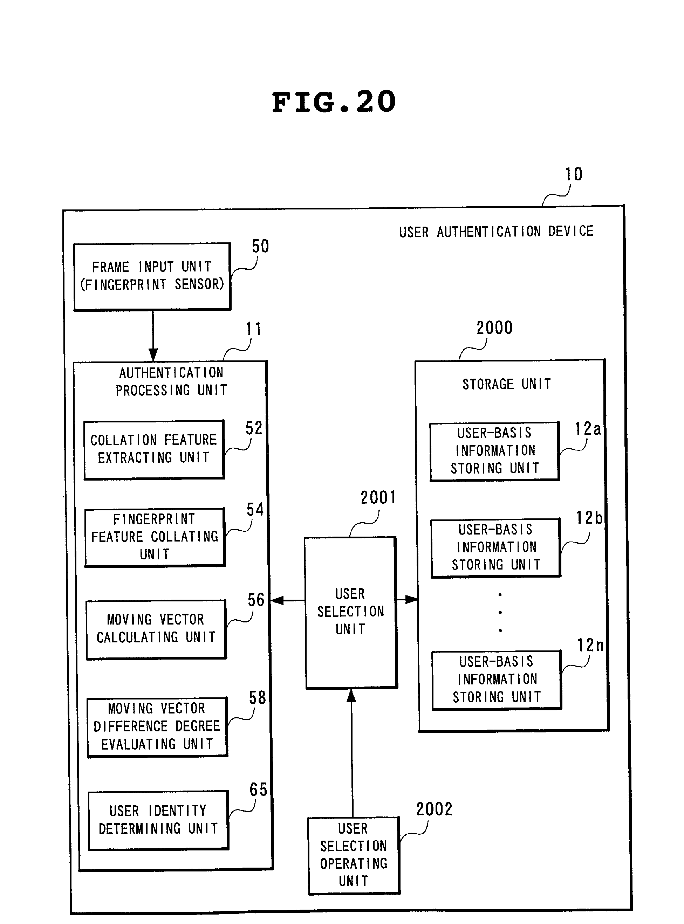

A user authentication device according to a fourth embodiment of the present invention will be described with reference to Fig. 20. Fig. 20 is a diagram showing the entire structure of the user authentication device according to the fourth embodiment.

While the above-described first to third embodiments have been described with respect to a case where the information apparatus is used by a single authorized user, the fourth embodiment is structured such that when a single information apparatus is shared by a plurality of users, authentication data composed of fingerprint data and a sweep pattern of each of a plurality of authorized users is stored to select a user at the time of use and conduct authentication for the same.

In Fig. 20, the same component as that of the first embodiment is given the common reference numeral. Structure and operation of the frame input unit 50 and the authentication processing unit 11 are the same as those described above.

In the present embodiment, a storage unit 2000 includes a plurality of user-basis information storing units 12a, 12b, ..., 12n for storing authentication data of each user. The user-basis information storing units 12a, 12b, ..., 12n each include the frame image storing unit 51, the collation feature storing unit 53, the preceding frame image storing unit 55 and the moving vector group storing unit 57 similarly to the storage unit 12 shown in Fig. 6.

Then, between the authentication processing unit 11 and the storage unit 2000, a user selection unit 2001 for selecting a user to be collated is provided. The user selection unit 2001 selects a user whose authentication data is to be registered and a user to be authenticated by the operation of a user selection operating unit 2002 composed of keys and buttons which is provided in the information apparatus.

Then, at the registration of authentication data, the authentication processing unit 11 stores fingerprint data and a sweep pattern of a user selected by the user selection unit 2001 into the user-basis information storing unit 12a, 12b, ..., or 12n corresponding to the selected user and in the authentication processing, conducts authentication processing based on authentication data stored in the user-basis information storing unit 12a, 12b, ..., or 12n corresponding to the selected user.

(Fifth Embodiment)

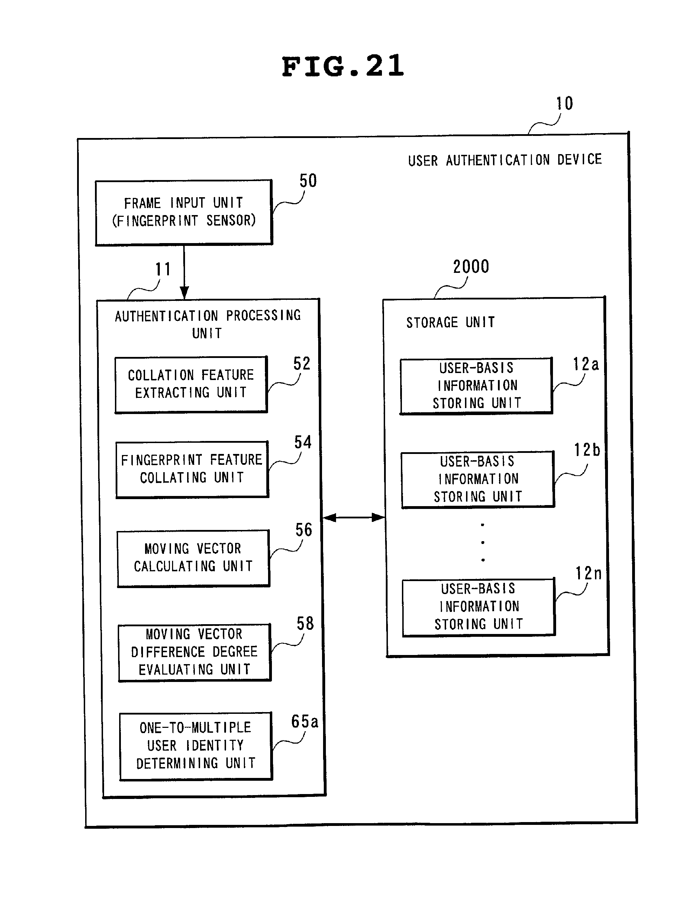

A user authentication device according to a fifth embodiment of the present invention will be described with reference to Fig. 21. Fig. 21 is a diagram showing the entire structure of the user authentication device according to the fifth embodiment.

The fifth embodiment is designed such that when a single information apparatus is shared by a plurality of users, authentication data composed of fingerprint data and a sweep pattern of each of a plurality of authorized users is stored to make determination of identity based on most similar authentication data at the time of authentication processing.

In Fig. 21, the same component as that of the first embodiment is given the common reference numeral. Structure and operation of the frame input unit 50 and the authentication processing unit 11 are the same as those described above.

In the present embodiment, the storage unit 2000 includes a plurality of user-basis information storing units 12a, 12b, ..., 12n for storing authentication data of each user. The user-basis information storing units 12a, 12b, ..., 12n each include the frame image storing unit 51, the collation feature storing unit 53, the preceding frame image storing unit 55 and the moving vector group storing unit 57 similarly to the storage unit 12 shown in Fig. 6.

Then, the authentication processing unit 11 is provided with a one-to-multiple user identity determining unit 65a.

The one-to-multiple user identity determining unit 65a collates input fingerprint data and sweep pattern with authentication data stored in the plurality of user-basis information storing units 12a, 12b, ..., 12n to determine their coincidence with the most similar authentication data.

This arrangement enables authentication of a plurality of users without selecting a user every time authentication is conducted as in the fourth embodiment.

(Sixth Embodiment)

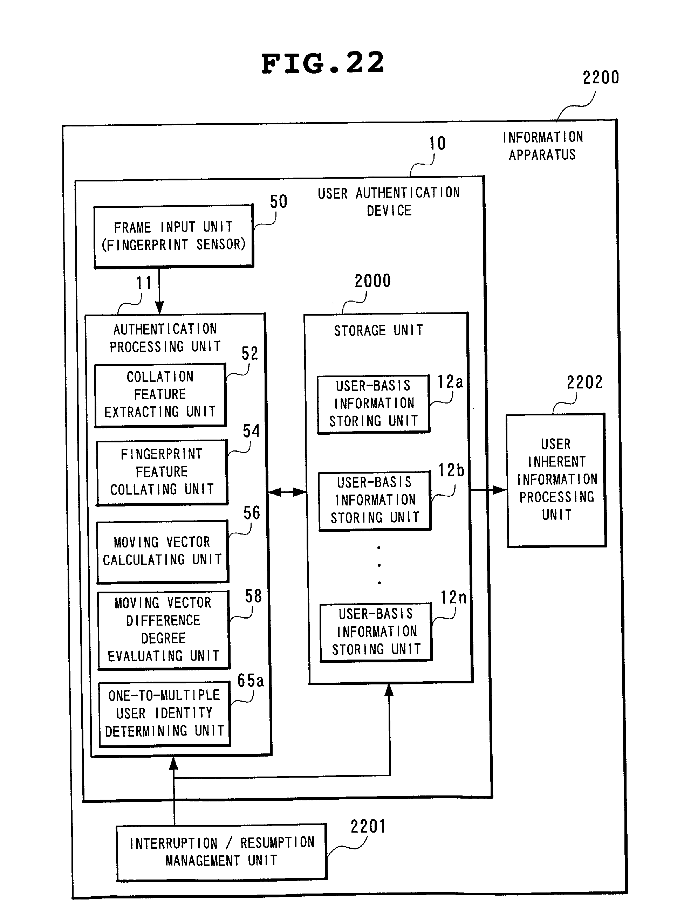

A user authentication device according to a sixth embodiment of the present invention will be described with reference to Fig. 22. Fig. 22 is a diagram showing a structure of an information apparatus having the user authentication device according to the sixth embodiment.

An information apparatus 2200 according to the sixth embodiment is an expansion of the above-described fifth embodiment and includes the user authentication device 10, an interruption/resumption management unit 2201 and a user inherent information processing unit 2202.

Then, according to the present embodiment, the storage unit 2000 includes a plurality of user-basis information storing units 12a, 12b, ..., 12n for storing user inherent information which are provided corresponding to authentication data of the respective users. The user-basis information storing units 12a, 12b, ..., 12n each include the frame image storing unit 51, the collation feature storing unit 53, the preceding frame image storing unit 55, the moving vector group storing unit 57 and a user inherent information storing unit similarly to the storage unit 12 shown in Fig. 6.

Then, the authentication processing unit 11 is provided with the one-to-multiple user identity determining unit 65a.

The interruption/resumption management unit 2201 instructs the authentication processing unit 11 and the storage unit 2000 to interrupt or resume use of the apparatus based on user's input.

When receiving an instruction to interrupt from the interruption/resumption management unit 2201, the user-basis information storing units 12a, 12b, ..., 12n store authentication data (fingerprint data and sweep pattern) received from the authentication processing unit 11 so as to be correlated with user's inherent information related to the information apparatus 2200.

Here, user inherent information includes all the data considered to be information useful personally for a user among the data handled by the information apparatus 2200. The data included is, for example, that indicative of work progress information (to which stage work is done), that indicative of working conditions information (under which conditions work is done) or that indicative of work history information (under which instruction work is done) when the user interrupts the use of the device. More specifically, information indicated by the data is "to which page of an electronic picture book have you read?", "to which stage of game have you played?", "what kind of background screen have you selected on display screen?", "how is layout on display screen?", "which search results have you obtained so far?", "what kinds of search keys have been given?", "what kinds of commands have been given?" and the like.

Such user inherent information may be designated by a user himself or automatically designated in the information apparatus 2200.

When receiving an instruction to resume from the interruption management unit 2201, the one-to-multiple user identity determining unit 65a of the authentication processing unit 11 conducts collation and based on the collation result, user inherent information correlated with authentication data having the highest degree of similarity with the input authentication data is selected from the user-basis information storing units 12a, 12b, ..., 12n and output to the user inherent information processing unit 2202.

At the time of collation processing conducted at the one-to-multiple user identity determining unit 65a, when authentication data giving a degree of similarity not less than a predetermined threshold value is detected in the course of the collation processing, the authentication data which gives the degree of similarity not less than the threshold value may be output as a collation result without collating all the authentication data.

The user inherent information processing unit 2202 receives user inherent information selected from the user-basis information storing units 12a, 12b, ..., 12n to conduct transmission presentation of the inherent information to the user, setting of the information apparatus 2200 or communication to other device group according to the contents of the user inherent information.

According to the sixth embodiment, when the same information apparatus is used by a plurality of users and the plurality of users have their inherent information (e.g. work progress information, working conditions information, and work history information) related to the information device, by identifying a user by his input fingerprint, information inherent to the user related to the information device is preserved corresponding to the user when the use of the device is interrupted and by selectively presenting, to the user, the preserved information inherent to the user which corresponds to the identified user when the use of the device is resumed, a burden on the user at the time of interruption/resumption of the use of the device is reduced and interruption/resumption is enabled smoothly.

(Seventh Embodiment)

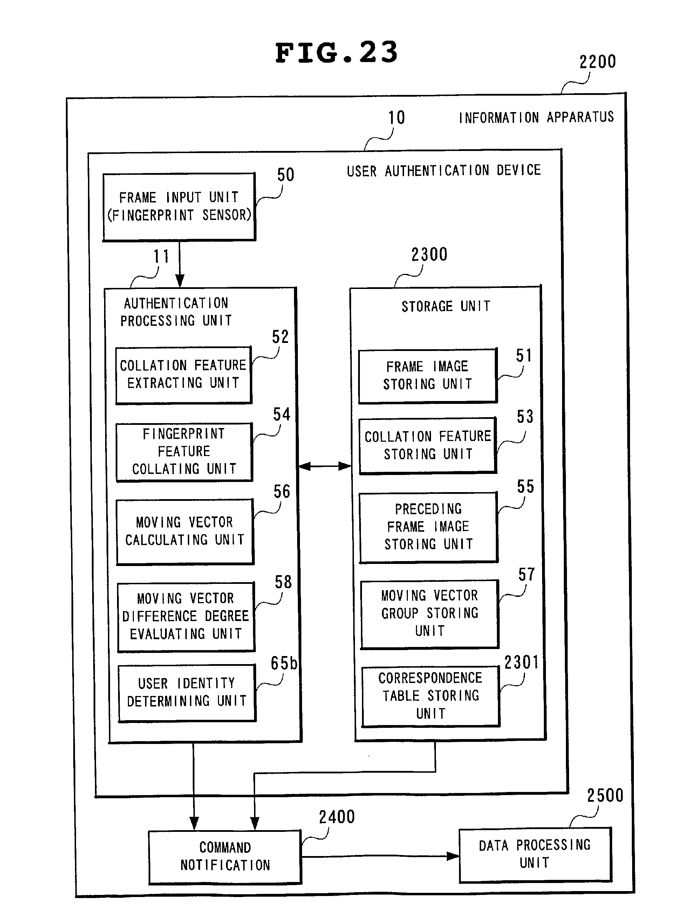

A user authentication device according to a seventh embodiment of the present invention will be described with reference to Fig. 23. Fig. 23 is a diagram showing a structure of an information apparatus including the user authentication device according to the seventh embodiment.

With reference to Fig. 23, the information apparatus 2200 according to the seventh embodiment includes the user authentication device 10 and a command notification unit 2400.

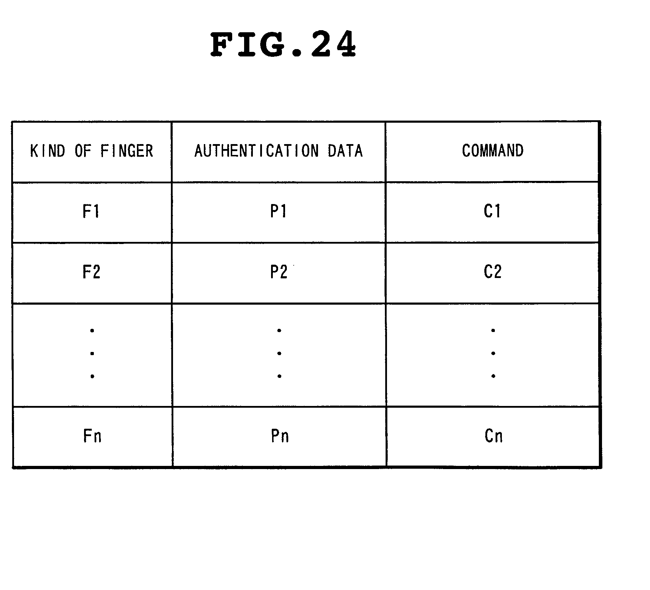

Similarly to the storage unit 12, a storage unit 2300 of the user authentication processing device 10 includes, in addition to the frame image storing unit 51, the collation feature storing unit 53, the preceding frame image storing unit 55 and the moving vector group storing unit 57, a correspondence table storing unit 2301, in which the correspondence table storing unit 2301 authentication data Pi of each finger Fi ($1 \leq i \leq n$) of a user is stored and as shown in Fig. 24, a correspondence table composed of commands Ci each allotted to each finger so as to correspond to the authentication data Pi of each finger Fi ($1 \leq i \leq n$) of the user is stored. The authentication data of each finger Fi is composed of the above-described fingerprint data and sweep pattern.

Each finger Fi in the correspondence table shown in Fig. 24 indicates a kind of finger such as the thumb of the right hand or the ring finger of the left hand. The commands Ci are instructions to an information apparatus to which the present invention is applied. In a case where the information apparatus to which the present invention is applied is a system capable of transmitting and receiving electronic mail, for example, "transmission of mail", "reception of mail", etc. correspond to the commands Ci.

A user identity determining unit 65b of the authentication processing unit 11 authenticates a user based on the results obtained by the fingerprint feature collating unit 54 and the moving vector difference degree evaluating unit 58, as well as specifying a kind of finger used for input by the user.

The command notification unit 2400 obtains a command assigned to a kind of finger specified by the user identity determining unit 65b based on the correspondence table stored in the storage unit 2300 and notifies the corresponding command to a data processing unit 2500 for controlling operation of the information apparatus of the present invention. Then, the data processing unit 2500 executes processing according to the notified command.

Since according to the present embodiment, a kind of finger which a user employed for operating the information apparatus is specified to discriminate user's input according to the kind of finger, the user is allowed to make different input by operating the apparatus using a different finger. This enables the information apparatus to execute different processing without requiring complicated key operation. A portable terminal, for example, is allowed to execute such processing as activating a calendar when operated by the right index finger and making a call to a person when operated by the right middle finger simultaneously with authentication.

Although the foregoing description has been made with respect to a case where authentication data and a command are correlated with each other for each kind of finger, the same effect can be obtained also by correlating authentication data and a command according to a manner of movement (sweep pattern) of the same finger.

In addition, although the fourth to seventh embodiments show combinations of their expanded functions with the first embodiment, they can be combined also with the second and the third embodiments.

Although in the foregoing description, a fingerprint of a hand has been taken as an example of biometrics, the present invention is similarly applicable to other biometrics.

First, a palmprint of a hand, for example, can be used as biometrics. In this case, inputting a sweep pattern by sweeping a part of the palm on the frame input unit in the same manner as that of a fingerprint enables the above-described first and second embodiments to be applicable without modification.

Secondly, the iris which is a muscle pattern in the surrounding of the pupil within the dark eye or a face itself can be used as biometrics. At the input of the biometrics through a camera, by moving the eye ball or the whole of the face relatively to the camera and also using its sweep pattern as secret information inherent to an authorized user, input of false biometrics can be eliminated to realize collation of higher precision.

The above-described user authentication methods can be realized not only by hardware but also as software using a user authentication program for realizing the above-described respective functions which is recorded in a recording medium of a computer system such as a magnetic disc or a semiconductor memory. The user authentication program, as shown in Fig. 6, is read from a recording medium 15 into the authentication processing unit (CPU) 11 of the computer system or downloaded from a network to control operation of the authentication processing unit 11, thereby realizing each function of the above-described units to execute user authentication processing. In other words, the processing.shown in Figs. 1 and 2 and Figs. 10 and 11 is executed.

Although the present invention have been described with respect to the preferred modes and the embodiments in the foregoing, the present invention is not necessarily limited to the above-described modes and embodiments but can be realized in variation within the scope of its technical idea.

As described in the foregoing, according to the present invention, since user authentication is conducted using a sweep pattern as light movement of a part of a body (e.g. fingerprint) expressed simultaneously with the input of the part of the body, more reliable user authentication is realized. Accordingly, when the present invention is applied to an information apparatus for use in electronic commerce etc., higher secrecy can be maintained.

More specifically, a sweep pattern is equivalent to light movement expressed simultaneously with the input of a part of a body and therefore can be secret information known only to a person in question. Provision of a cover at an input unit or other method will further enhance its confidentiality. The sweep pattern can be handled as personal information effective for specifying a person in question because even when other person by any chance sees his sweep pattern, it is difficult to reproduce the same appropriately. Accordingly, a method of authenticating a person in question more precisely only when with respect to both static feature information as of the start of sweeping and a sweep pattern, inputs at the registration and authentication satisfactorily coincide with each other realizes more reliable user authentication.

Using a sweep pattern that only an authorized user is allowed to know together with a collation result of feature information obtained from a still picture enables more reliable user authentication to be realized. More specifically, even if a fingerprint pattern can be imitated by a false finger (replica), unless sweep patterns as of before and after the fingerprint pattern input can be imitated, pretension of others using such a false finger can be eliminated.

Furthermore, even a small-sized sensor having a small area which can be realized at low costs enables input of partial images of many parts of a body by sweeping on the sensor and enables collation of feature information using the images, and further use of a sweep pattern known only to a person in question and hard to imitate by others even peeping enables stable confirmation of the person in question with higher precision. In addition, reduction in costs and areas of a sensor will expand a range of applicable apparatuses on which the sensor can be mounted to enable application in a wider range.

Arrangement of conducting authentication of a user based on a pressure value pattern in addition to feature information and a sweep pattern realizes more reliable user authentication.

Provision of a cover for concealing movement of a finger when an authorized user registers his sweep pattern prevents a false user from imitating the authorized user's finger movement, thereby enhancing secrecy of a sweep pattern.

In addition, when a single information apparatus is shared by a plurality of users, storing authentication data composed of fingerprint data and a sweep pattern of each of a plurality of authorized users to conduct authentication for each user enables highly reliable user authentication even when an information apparatus is shared.

Moreover, in case where the same information apparatus is used by a plurality of users and the plurality of users have their inherent information related to the information device (e.g. work progress information, working conditions information and work history information), by identifying a user by an input fingerprint, information related to the information device which is inherent to the user is preserved corresponding to the user when the use of the device is interrupted, and the preserved information inherent to the user which corresponds to the identified user is selectively provided to the user when the use of the device is resumed, thereby reducing a burden on a user at the time of interruption/ resumption of the use of the device, as well as enabling smooth interruption/resumption.

In addition, since a kind and a pattern of finger which a user employed for operating an information apparatus is specified to discriminate user' input according to the kind and the pattern of finger, the user is allowed to make different input by using a different finger. As a result, the information apparatus is allowed to conduct different processing simultaneously with authentication without requiring complicated key operation.

Although the invention has been illustrated and described with respect to exemplary embodiment thereof, it should be understood by those skilled in the art that the foregoing and various other changes, omissions and additions may be made therein and thereto, without departing from the spirit and scope of the present invention.

**Claims**

1. A user authentication method of making determination of identity of a user based on an image of a part of a body of the user as biometrics captured by a sensor, comprising the step of
   using information about a pattern of movement of said part of the body relative to said sensor as secret information for specifying a user to conduct user authentication.

2. The user authentication method as set forth in claim 1, wherein
   determination of identity of a registered user is made based on both a degree of similarity of feature information extracted from a single image of said part of the body captured by said sensor and a degree of similarity of said relative movement pattern.

3. The user authentication method as set forth in claim 1, wherein
   with respect to a frame as a series of images of said part of the body captured by said sensor, a corresponding point between a preceding frame and a current frame is searched to obtain a sweep pattern which is a series of moving vectors obtained by calculating a moving vector of the relative movement of said part of the body as said relative movement pattern, thereby conducting user authentication based on the sweep pattern in question.

4. The user authentication method as set forth in claim 1, wherein
   with respect to feature information extracted from a single image of said part of the body captured by said sensor and a frame as a series of images of said part of the body captured by said sensor, a corresponding point between a preceding frame and a current frame is searched to conduct user authentication based on a sweep pattern as a series of moving vectors obtained by calculating a moving vector of relative movement of a finger.

5. The user authentication method as set forth in claim 1, wherein
   a degree of similarity of said relative movement pattern and a frame as a series of images of said part of the body captured by said sensor are sequentially registered so as to have overlaps correlated best to extract feature information for collation from a composite image obtained by composition, thereby conducting user authentication based on a degree of similarity of the feature information in question.

6. The user authentication method as set forth in claim 1, wherein
   with respect to a frame as a series of images of said part of the body captured by said sensor, a corresponding point between a preceding frame and a current frame is searched to obtain a sweep pattern which is a series of moving vectors obtained by calculating a moving vector of the relative movement of said part of the body as said relative movement pattern, and
   with respect to a frame as a series of images of said part of the body captured by said sensor, the frames are sequentially registered so as to have overlaps correlated best to extract feature information for collation from a composite image obtained by composition, thereby conducting user authentication based on said sweep pattern and said feature information.

7. The user authentication method as set forth in claim 1, wherein
   a pressure value pattern as a series of pressure value difference vectors is obtained from a time series change of a pressure value in the relative movement of said part of the body to conduct user authentication based on said relative movement pattern and said pressure value pattern.

8. The user authentication method as set forth in claim 1, wherein
   user authentication is conducted based on:

feature information extracted from a single image of said part of the body captured by said sensor,

a sweep pattern which is a series of moving vectors obtained by searching, with respect to a frame as a series of images of said part of the body captured by said sensor, a corresponding point between a preceding frame and a current frame and calculating a moving vector of relative movement of a finger, and

a pressure value pattern as a series of pressure value difference vectors obtained from a time series change of a pressure value in the relative movement of said part of the body.

9. The user authentication method as set forth in claim 1, wherein

with respect to a frame as a series of images of said part of the body captured by said sensor, a corresponding point between a preceding frame and a current frame is searched to obtain a sweep pattern which is a series of moving vectors obtained by calculating a moving vector of the relative movement of said part of the body as said relative movement pattern,

with respect to a frame as a series of images of said part of the body captured by said sensor, the frames are sequentially registered so as to have overlaps correlated best to extract feature information for collation from a composite image obtained by composition, and

a pressure value pattern as a series of pressure value difference vectors is obtained from a time series change of a pressure value in the relative movement of said part of the body, thereby conducting user authentication based on said sweep pattern, said feature information and said pressure value pattern.

10. The user authentication method as set forth in claim 1, wherein

said part of the body is a finger and relative movement pattern information of the finger in question is used as secret information for specifying a user.

11. The user authentication method as set forth in claim 1, wherein

said relative movement pattern information of a plurality of users are registered corresponding to the respective users to conduct user authentication for each selected user.

12. The user authentication method as set forth in claim 1, wherein

said relative movement pattern information of a plurality of users are registered corresponding to the respective users to conduct user authentication by specifying a user based on said relative movement pattern information of the user input through said sensor.

13. A user authentication device for making determination of identity of a user with an image of a part of a body of the user as biometrics captured by a sensor as input, wherein

information about a pattern of movement of said part of the body relative to said sensor is input to conduct user authentication based on the relative movement pattern.

14. The user authentication device as set forth in claim 13, wherein

determination of identity of a registered user is made based on both a degree of similarity of feature information extracted from a single image of said part of the body captured by said sensor and a degree of similarity of said relative movement pattern.

15. The user authentication device as set forth in claim 13, comprising

means (56) for searching, with respect to a frame as a series of images of said part of the body captured by said sensor, a corresponding point between a preceding frame and a current frame and calculating a moving vector of the relative movement of said part of the body to obtain a sweep pattern which is a series of moving vectors as said relative movement pattern.

16. The user authentication device as set forth in claim 13, comprising:

means (56) for searching, with respect to a frame as a series of images of said part of the body captured by said sensor, a corresponding point between a preceding frame and a current frame and calculating a moving vector of the relative movement of said part of the body to obtain a sweep pattern which is a series of moving vectors as said relative movement pattern,

means (57) for storing a relative movement pattern of an authorized user in advance, and

determination means (65) for comparing a relative movement pattern obtained at the time of authentication with a relative movement pattern in said storage means (57) to determine a degree of similarity between the patterns.

17. The user authentication device as set forth in claim 13, comprising:

means (52) for extracting feature information from a single image of said part of the body captured by said sensor,

first storage means (53) for storing said feature information of an authorized user in advance, means (56) for searching, with respect to a frame as a series of images of said part of the body captured by said sensor, a corresponding point between a preceding frame and a current frame and calculating a moving vector of the relative movement of said part of the body to obtain a sweep pattern which is a series of moving vectors as said relative movement pattern, second storage means (57) for storing said relative movement pattern of an authorized user in advance, and
determination means (65) for comparing said feature information and said relative movement pattern obtained at the time of authentication with said feature information and said relative movement pattern in said first and second storage means (53, 57) to determine a degree of similarity between the information and patterns.

18. The user authentication device as set forth in claim 13, wherein
a degree of similarity of said relative movement pattern and a frame as a series of images of said part of the body captured by said sensor are sequentially registered so as to have overlaps correlated best to extract feature information for collation from a composite image obtained by composition, thereby conducting user authentication based on a degree of similarity of the feature information in question.

19. The user authentication device as set forth in claim 13, comprising:

means (76) for searching, with respect to a frame as a series of images of said part of the body captured by said sensor, a corresponding point between a preceding frame and a current frame and calculating a moving vector of the relative movement of said part of the body to obtain a sweep pattern which is a series of moving vectors as said relative movement pattern, means (72) for sequentially registering, with respect to a frame as a series of images of said part of the body captured by said sensor, the frames so as to have overlaps correlated best to extract feature information for collation from a composite image obtained by composition, and
determination means (85) for comparing said feature information and said relative movement pattern obtained at the time of authentication with said feature information and said relative movement pattern of an authorized user to determine a degree of similarity between the information and patterns.

20. The user authentication device as set forth in claim 13, wherein a pressure value pattern as a series of pressure value difference vectors is obtained from a time series change of a pressure value in the relative movement of said part of the body to conduct user authentication based on said relative movement pattern and said pressure value pattern.

21. The user authentication device as set forth in claim 13, comprising:

means (52) for extracting feature information from a single image of said part of the body captured by said sensor, means (56) for searching, with respect to a frame as a series of images of said part of the body captured by said sensor, a corresponding point between a preceding frame and a current frame and calculating a moving vector of the relative movement of said part of body to obtain a sweep pattern which is a series of moving vectors as said relative movement pattern, means (156) for obtaining a pressure value pattern as a series of pressure value difference vectors from a time series change of a pressure value in the relative movement of said part of the body, and
determination means (65) for comparing said feature information, said relative movement pattern and said pressure value pattern obtained at the time of authentication with said feature information, said relative movement pattern and said pressure value pattern of an authorized user to determine a degree of similarity among the information and patterns.

22. The user authentication device as set forth in claim 13, comprising:

means (56) for searching, with respect to a frame as a series of images of said part of the body captured by said sensor, a corresponding point between a preceding frame and a current frame and calculating a moving vector of the relative movement of said part of the body to obtain a sweep pattern which is a series of moving vectors as said relative movement pattern, means (72) for sequentially registering, with respect to a frame as a series of images of said part of the body captured by said sensor, the frames so as to have overlaps correlated best to extract feature information for collation from a composite image obtained by composition, means (156) for obtaining a pressure value pattern as a series of pressure value difference vectors from a time series change of a pressure value in the relative movement of said part of the body, and

determination means (65) for comparing said sweep pattern, said feature information and said pressure value pattern obtained at the time of authentication with said relative movement pattern, said feature information and said pressure value pattern of an authorized user to determine a degree of similarity between the information and patterns.

23. The user authentication device as set forth in claim 13, wherein

said part of the body is a finger and relative movement pattern information of the finger in question is used as secret information for specifying a user.

24. The user authentication device as set forth in claim 13, wherein

provided around said sensor is a cover for covering relative movement of said part of the body from the outside.

25. The user authentication device as set forth in claim 13, wherein

said relative movement pattern information of a plurality of users are registered corresponding to the respective users to conduct user authentication for each selected user.

26. The user authentication device as set forth in claim 25, comprising

selection means (2001) for selecting a user to be authenticated from among a plurality of users.

27. The user authentication device as set forth in claim 13, wherein

said relative movement pattern information of a plurality of users are registered corresponding to the respective users to conduct user authentication by specifying a user based on said relative movement pattern information of the user input through said sensor.

28. A user authentication program for making determination of identity of a user based on an image of a part of a body of the user as biometrics captured by a sensor, comprising the function of

conducting user authentication by using information about a pattern of movement of said part of the body relative to said sensor as secret information for specifying a user.

29. The user authentication program as set forth in claim 28, wherein

determination of identity of a registered user is made based on both a degree of similarity of feature information extracted from a single image of said part of the body captured by said sensor and a degree of similarity of said relative movement pattern.

30. The user authentication program as set forth in claim 28, wherein

with respect to a frame as a series of images of said part of the body captured by said sensor, a corresponding point between a preceding frame and a current frame is searched, and

a sweep pattern which is a series of moving vectors obtained by calculating a moving vector of the relative movement of said part of the body is obtained as said relative movement pattern, thereby conducting user authentication based on the sweep pattern in question.

31. The user authentication program as set forth in claim 28, wherein

with respect to feature information extracted from a single image of said part of the body picked by said sensor and a frame as a series of images of said part of the body captured by said sensor, a corresponding point between a preceding frame and a current frame is searched to conduct user authentication based on a sweep pattern as a series of moving vectors obtained by calculating a moving vector of relative movement of a finger.

32. The user authentication program as set forth in claim 28, wherein

a degree of similarity of said relative movement pattern and a frame as a series of images of said part of the body captured by said sensor are sequentially registered so as to have overlaps correlated best to extract feature information for collation from a composite image obtained by composition, thereby conducting user authentication based on a degree of similarity of the feature information in question.

33. The user authentication program as set forth in claim 28, wherein

with respect to a frame as a series of images of said part of the body captured by said sensor, a corresponding point between a preceding frame and a current frame is searched to obtain a sweep pattern which is a series of moving vectors obtained by calculating a moving vector of the relative movement of said part of the body as said relative movement pattern, and

with respect to a frame as a series of images of said part of the body captured by said sensor, the frames are sequentially registered so as to have overlaps correlated best to extract feature information for collation from a composite image obtained by composition, thereby conducting user authentication based on said sweep pattern and said feature information.

**34.** The user authentication program as set forth in claim 28, wherein

a pressure value pattern as a series of pressure value difference vectors is obtained from a time series change of a pressure value in the relative movement of said part of the body to conduct user authentication based on said relative movement pattern and said pressure value pattern.

**35.** The user authentication program as set forth in claim 28, wherein

user authentication is conducted based on:

feature information extracted from a single image of said part of the body captured by said sensor,
a sweep pattern as a series of moving vectors obtained by searching, with respect to a frame as a series of images of said part of the body captured by said sensor, a corresponding point between a preceding frame and a current frame and calculating a moving vector of the relative movement of a finger, and
a pressure value pattern as a series of pressure value difference vectors obtained from a time series change of a pressure value in the relative movement of said part of the body.

**36.** The user authentication program as set forth in claim 28, wherein

with respect to a frame as a series of images of said part of the body captured by said sensor, a corresponding point between a preceding frame and a current frame is searched to obtain a sweep pattern which is a series of moving vectors obtained by calculating a moving vector of the relative movement of said part of the body as said relative movement pattern,
with respect to a frame as a series of images of said part of the body captured by said sensor, the frames are sequentially registered so as to have overlaps correlated best to extract feature information for collation from a composite image obtained by composition, and
a pressure value pattern as a series of pressure value difference vectors is obtained from a time series change of a pressure value in the relative movement of said part of the body, thereby conducting user authentication based on said sweep pattern, said feature information and said pressure value pattern.

**37.** The user authentication program as set forth in claim 36, wherein

said part of the body is a finger and relative movement pattern information of the finger in question is used as secret information for specifying a user.

**38.** The user authentication program as set forth in claim 28, wherein

said relative movement pattern information of a plurality of users are registered corresponding to the respective users to conduct user authentication for each selected user.

**39.** The user authentication program as set forth in claim 28, wherein

said relative movement pattern information of a plurality of users are registered corresponding to the respective users to conduct user authentication by specifying a user based on said relative movement pattern information of the user input through said sensor.

**40.** An information processing method using user authentication of making determination of identity of a user with an image of a part of a body of the user as biometrics captured by a sensor as input, comprising the steps of:

receiving input of information about a pattern of movement of said part of the body relative to said sensor to conduct user authentication based on the relative movement pattern in question,
having user inherent information related to interruption and resumption of operation of an apparatus which is correlated with said relative movement pattern information registered for each of a plurality of users, and
executing interruption and resumption of operation of said apparatus based on said user inherent information corresponding to a user whose user authentication has been conducted.

**41.** An information apparatus having a user authentication device for making determination of identity of a user with an image of a part of a body of the user as biometrics captured by a sensor as input, which apparatus

inputs information about a pattern of movement of said part of the body relative to said sensor to conduct user authentication based on the relative movement pattern in question,
has user inherent information related to interruption and resumption of operation of the apparatus which is correlated with said relative movement pattern information registered for each of a plurality of users, and
executes interruption and resumption of operation of said apparatus based on said user inherent information corresponding to a user whose user authentication has been conducted.

**42.** An information processing method using user authentication of making determination of identity of a user with an image of a part of a body of the user as biometrics captured by a sensor as input, comprising the steps of:

inputting information about a pattern of movement of said part of the body relative to said sensor to conduct user authentication based on the relative movement pattern in question, registering a command giving an instruction on operation of the apparatus so as to be correlated with said relative movement pattern information registered for each of a plurality of parts of the body or each of a plurality of users, and executing operation of said apparatus based on said command corresponding to said part of the body or said user whose user authentication has been conducted.

43. An information apparatus having a user authentication device for making determination of identity of a user with an image of a part of a body of the user as biometrics captured by a sensor as input, which apparatus

inputs information about a pattern of movement of said part of the body relative to said sensor to conduct user authentication based on the relative movement pattern in question,

registers a command giving an instruction on operation of the apparatus so as to be correlated with said relative movement pattern information registered for each of a plurality of parts of the body or each of a plurality of users, and

executes operation of said apparatus based on said command corresponding to said part of the body or said user whose user authentication has been conducted.

# FIG. 1

**101** TO INPUT REGISTERED FINGERPRINT IMAGE

**102** TO EXTRACT COLLATION FEATURES

**103** TO STORE COLLATION FEATURES

**104** TO INPUT m-TH FRAME f(m)

**105** TO CALCULATE MOVING VECTOR

**106** TO STORE GROUP OF MOVING VECTORS

# FIG. 2

201

TO INPUT INITIAL FINGERPRINT
IMAGE TO BE CONFIRMED

202

TO EXTRACT COLLATION
FEATURES

203

TO COLLATE FEATURES

206

TO INPUT n-TH FRAME g(n)

207

TO CALCULATE
MOVING VECTOR

205

TO EVALUATE DEGREE
OF DIFFERENCE BY
COLLATING FEATURES

208

TO EVALUATE DEGREE OF
DIFFERENCE BETWEEN GROUPS
OF MOVING VECTORS

209

TO MAKE DETERMINATION OF USER IDENTITY

# FIG. 3

# FIG. 4

# FIG. 5

50

FRAME INPUT UNIT
(FINGERPRINT SENSOR)

51

FRAME IMAGE STORING UNIT

52

COLLATION FEATURE
EXTRACTING UNIT

55

PRECEDING
FRAME IMAGE
STORING UNIT

53

COLLATION
FEATURE
STORING UNIT

54

FINGERPRINT
FEATURE
COLLATING UNIT

56

MOVING VECTOR
CALCULATING UNIT

58

MOVING VECTOR
DIFFERENCE DEGREE
EVALUATING UNIT

57

MOVING VECTOR
GROUP STORING
UNIT

65

USER IDENTITY DETERMINING UNIT

# FIG. 6

10

USER AUTHENTICATION DEVICE

FRAME INPUT UNIT
(FINGERPRINT SENSOR) — 50

11

AUTHENTICATION PROCESSING
UNIT

COLLATION FEATURE
EXTRACTING UNIT — 52

FINGERPRINT FEATURE
COLLATING UNIT — 54

MOVING VECTOR
CALCULATING UNIT — 56

MOVING VECTOR
DIFFERENCE DEGREE
EVALUATING UNIT — 58

USER IDENTITY
DETERMINING UNIT — 65

12

STORAGE UNIT

FRAME IMAGE
STORING UNIT — 51

COLLATION FEATURE
STORING UNIT — 53

PRECEDING FRAME
IMAGE STORING UNIT — 55

MOVING VECTOR GROUP
STORING UNIT — 57

STORAGE
MEDIUM — 15

# FIG. 7

# FIG. 8

# FIG. 9

# FIG.10

```
                    ┌─────────────────────────┐   601
                    │   TO INPUT REGISTERED    │
                    │   FINGERPRINT IMAGE      │
                    └─────────────────────────┘
                                │
          ┌─────────────────────┤
          │                     ▼
          │         ┌─────────────────────────────┐   602
          │         │   TO INPUT m-TH FRAME f(m)   │
          │         └─────────────────────────────┘
          │                     │
          │                     │        603
          │                     ▼
          │         ┌─────────────────────┐
          │◄────────│    TO CALCULATE     │
          │         │   MOVING VECTOR     │
          │         └─────────────────────┘
          │              │           │
          │              │           ▼
          │              │   ┌─────────────────┐
          │              │   │  TO STORE MOVING │
          │              │   │     VECTORS      │
          │              │   └─────────────────┘
          │              │           │
          │              │       604 │
          │              │           │
          ▼              ▼           ▼
┌──────────────────────────────────────────────┐   605
│   TO MAKE PARALLEL DISPLACEMENT OF f(m)        │
│   TO COMBINE WITH S(m-1) -> S(m)               │
└──────────────────────────────────────────────┘
                    │
                    ▼
        ┌─────────────────────────┐   606
        │   TO EXTRACT COLLATION   │
        │        FEATURES          │
        └─────────────────────────┘
                    │
                    ▼
        ┌─────────────────────────┐   607
        │   TO STORE COLLATION     │
        │        FEATURES          │
        └─────────────────────────┘
```

# FIG.11

701
TO INPUT REGISTERED
FINGERPRINT IMAGE

702
TO INPUT n-TH FRAME g(n)

703
TO CALCULATE MOVING
VECTOR

TO EVALUATE
DIFFERENCE DEGREE
OF MOVING VECTOR
704

705
TO MAKE PARALLEL DISPLACEMENT OF g(n) TO
COMBINE WITH S(n-1) -> S(n)

706
TO EXTRACT COLLATION
FEATURES

707
TO COLLATE FEATURES

708
TO MAKE DETERMINATION OF
USER IDENTITY

# FIG.12

SMALL AREA SENSOR

50a

31

30

# FIG.13

50a

SMALL AREA SENSOR

31

30

# FIG.14

FRAME INPUT UNIT — 50a

FRAME IMAGE STORING UNIT — 71

PARTIAL COMPOSITE IMAGE STORING UNIT — 82

PRECEDING FRAME IMAGE STORING UNIT — 75

IMAGE COMPOSING UNIT — 81

MOVING VECTOR CALCULATING UNIT — 76

MOVING VECTOR DIFFERENCE DEGREE EVALUATING UNIT — 78

MOVING VECTOR GROUP STORING UNIT — 77

COLLATION FEATURE EXTRACTING UNIT — 72

COLLATION FEATURE STORING UNIT — 73

FINGERPRINT FEATURE COLLATING UNIT — 74

USER IDENTITY DETERMINING UNIT — 85

# FIG.15

**USER AUTHENTICATION DEVICE** — 10

**FRAME INPUT UNIT (FINGERPRINT SENSOR)** — 50a

**AUTHENTICATION PROCESSING UNIT** — 11

- **COLLATION FEATURE EXTRACTING UNIT** — 72
- **FINGERPRINT FEATURE COLLATING UNIT** — 74
- **MOVING VECTOR CALCULATING UNIT** — 76
- **MOVING VECTOR DIFFERENCE DEGREE EVALUATING UNIT** — 78
- **IMAGE COMPOSING UNIT** — 81
- **USER IDENTITY DETERMINING UNIT** — 85

**STORAGE UNIT** — 12

- **FRAME IMAGE STORING UNIT** — 71
- **COLLATION FEATURE STORING UNIT** — 73
- **PRECEDING FRAME IMAGE STORING UNIT** — 75
- **MOVING VECTOR GROUP STORING UNIT** — 77
- **PARTIAL COMPOSITE IMAGE STORING UNIT** — 82

**STORAGE MEDIUM** — 15

**FIG.16**

```
FRAME INPUT UNIT ⌇50

        │
        ▼

FRAME IMAGE STORING UNIT ⌇51

        │
        ▼
```

COLLATION FEATURE EXTRACTING UNIT ⌇52

COLLATION FEATURE STORING UNIT ⌇53

FINGERPRINT FEATURE COLLATING UNIT ⌇54

PRECEDING FRAME IMAGE STORING UNIT ⌇55

MOVING VECTOR CALCULATING UNIT ⌇56

MOVING VECTOR DIFFERENCE DEGREE EVALUATING UNIT ⌇58

MOVING VECTOR GROUP STORING UNIT ⌇57

PRESSURE INPUT UNIT ⌇150

PRESSURE VALUE STORING UNIT ⌇151

PRECEDING PRESSURE VALUE STORING UNIT ⌇155

PRESSURE VALUE DIFFERENCE VECTOR CALCULATING UNIT ⌇156

PRESSURE VALUE DIFFERENCE VECTOR DIFFERENCE DEGREE DETERMINING UNIT ⌇158

PRESSURE VALUE DIFFERENCE VECTOR GROUP STORING UNIT ⌇157

USER IDENTITY DETERMINING UNIT ⌇65

EP 1 288 845 A2

# FIG.17

USER AUTHENTICATION DEVICE — 10

| FRAME INPUT UNIT (FINGERPRINT SENSOR) — 50 | PRESSURE INPUT UNIT — 150 |

**AUTHENTICATION PROCESSING UNIT — 11**

- COLLATION FEATURE EXTRACTING UNIT — 52
- FINGERPRINT FEATURE COLLATING UNIT — 54
- MOVING VECTOR CALCULATING UNIT — 56
- MOVING VECTOR DIFFERENCE DEGREE EVALUATING UNIT — 58
- USER IDENTITY DETERMINING UNIT — 65
- PRESSURE VALUE DIFFERENCE VECTOR CALCULATING UNIT — 156
- PRESSURE VALUE DIFFERENCE VECTOR DIFFERENCE DEGREE EVALUATING UNIT — 158

**STORAGE UNIT — 12**

- FRAME IMAGE STORING UNIT — 51
- COLLATION FEATURE STORING UNIT — 53
- PRECEDING FRAME IMAGE STORING UNIT — 55
- MOVING VECTOR GROUP STORING UNIT — 57
- PRESSURE VALUE STORING UNIT — 151
- PRECEDING PRESSURE VALUE STORING UNIT — 155
- PRESSURE VALUE DIFFERENCE VECTOR GROUP STORING UNIT — 157

RECORDING MEDIUM — 15

36

# FIG.18

1001

TO INPUT PRESSURE VALUE

1002

TO INPUT m-TH PRESSURE VALUE p(m)

1003

TO CALCULATE PRESSURE VALUE
DIFFERENCE VECTOR

1004

TO STORE PRESSURE VALUE
DIFFERENCE VECTOR GROUP

EP 1 288 845 A2

# FIG.19

TO INPUT PRESSURE VALUE — 1101

TO INPUT n-TH PRESSURE VALUE Q(n) — 1102

TO CALCULATE PRESSURE VALUE DIFFERENCE VECTOR — 1103

TO EVALUATE DEGREE OF DIFFERENCE IN PRESSURE VALUE DIFFERENCE VECTOR GROUP — 1104

TO MAKE DETERMINATION OF USER IDENTITY — 1105

38

# FIG.20

USER AUTHENTICATION DEVICE —— 10

FRAME INPUT UNIT
(FINGERPRINT SENSOR) —— 50

AUTHENTICATION
PROCESSING UNIT —— 11

COLLATION FEATURE
EXTRACTING UNIT —— 52

FINGERPRINT
FEATURE COLLATING
UNIT —— 54

MOVING VECTOR
CALCULATING UNIT —— 56

MOVING VECTOR
DIFFERENCE DEGREE
EVALUATING UNIT —— 58

USER IDENTITY
DETERMINING UNIT —— 65

USER
SELECTION
UNIT —— 2001

STORAGE UNIT —— 2000

USER-BASIS
INFORMATION
STORING UNIT —— 12a

USER-BASIS
INFORMATION
STORING UNIT —— 12b

USER-BASIS
INFORMATION
STORING UNIT —— 12n

USER
SELECTION
OPERATING
UNIT —— 2002

# FIG.21

10

**USER AUTHENTICATION DEVICE**

FRAME INPUT UNIT (FINGERPRINT SENSOR)  50

11

AUTHENTICATION PROCESSING UNIT

COLLATION FEATURE EXTRACTING UNIT  52

FINGERPRINT FEATURE COLLATING UNIT  54

MOVING VECTOR CALCULATING UNIT  56

MOVING VECTOR DIFFERENCE DEGREE EVALUATING UNIT  58

ONE-TO-MULTIPLE USER IDENTITY DETERMINING UNIT  65a

2000

STORAGE UNIT

USER-BASIS INFORMATION STORING UNIT  12a

USER-BASIS INFORMATION STORING UNIT  12b

USER-BASIS INFORMATION STORING UNIT  12n

# FIG.22

2200

INFORMATION
APPARATUS

10

USER AUTHENTICATION
DEVICE

50

FRAME INPUT UNIT
(FINGERPRINT SENSOR)

11

2000

AUTHENTICATION
PROCESSING UNIT

52

COLLATION
FEATURE
EXTRACTING UNIT

54

FINGERPRINT
FEATURE
COLLATING UNIT

56

MOVING VECTOR
CALCULATING UNIT

58

MOVING VECTOR
DIFFERENCE
DEGREE
EVALUATING UNIT

65a

ONE-TO-MULTIPLE
USER IDENTITY
DETERMINING UNIT

STORAGE UNIT

12a

USER-BASIS
INFORMATION
STORING UNIT

12b

USER-BASIS
INFORMATION
STORING UNIT

12n

USER-BASIS
INFORMATION
STORING UNIT

2202

USER
INHERENT
INFORMATION
PROCESSING
UNIT

2201

INTERRUPTION / RESUMPTION
MANAGEMENT UNIT

41

# FIG.23

2200

INFORMATION APPARATUS

10

USER AUTHENTICATION DEVICE

FRAME INPUT UNIT
(FINGERPRINT SENSOR) — 50

11

AUTHENTICATION
PROCESSING UNIT

COLLATION FEATURE
EXTRACTING UNIT — 52

FINGERPRINT
FEATURE
COLLATING UNIT — 54

MOVING VECTOR
CALCULATING UNIT — 56

MOVING VECTOR
DIFFERENCE DEGREE
EVALUATING UNIT — 58

USER IDENTITY
DETERMINING UNIT — 65b

2300

STORAGE UNIT

FRAME IMAGE
STORING UNIT — 51

COLLATION FEATURE
STORING UNIT — 53

PRECEDING
FRAME IMAGE
STORING UNIT — 55

MOVING VECTOR
GROUP STORING
UNIT — 57

CORRESPONDENCE
TABLE STORING
UNIT — 2301

2500

COMMAND
NOTIFICATION — 2400

DATA PROCESSING
UNIT

# FIG.24

| KIND OF FINGER | AUTHENTICATION DATA | COMMAND |
|:---:|:---:|:---:|
| F1 | P1 | C1 |
| F2 | P2 | C2 |
| ⋮ | ⋮ | ⋮ |
| Fn | Pn | Cn |